# EUROPEAN PATENT APPLICATION

(11) **EP 4 676 153 A1**
(43) Date of publication of application: **07.01.2026**
(21) Application number: 25187514.2
(22) Date of filing: 04.07.2025
(51) Int. Cl.: H04W 74/00, H04W 84/12, H04W 74/0816

(54) **COEXISTENCE INITIAL CONTROL FRAME AND MULTI-BLOCK ACKNOWLEDGEMENT DESIGN FOR PROBE BEFORE TALK**

(30) Priority: 05.07.2024 US 202463668137 P; 01.07.2025 US 202519257413
(71) Applicant: Apple Inc., Cupertino, CA 95014 (US)
(72) Inventor: AJAMI, Abdel Karim, Cupertino, 95014 (US); MEHRNOUSH, Morteza, Cupertino, 95014 (US); ABOUELSEOUD, Mohamed, Cupertino, 95014 (US); WANG, Qi, Cupertino, 95014 (US); KRISHNAN, Neelakantan Nurani, Cupertino, 95014 (US); KNECKT, Jarkko L, Cupertino, 95014 (US); BATRA, Anuj, Cupertino, 95014 (US); LIU, Yong, Cupertino, 95014 (US); SUN, Yanjun, Cupertino, 95014 (US); GHOSH, Chittabrata, Cupertino, 95014 (US); ZHANG, Yan, Cupertino, 95014 (US); HEDAYAT, Ahmad Reza, Cupertino, 95014 (US); SEOK, Yong Ho, Cupertino, 95014 (US); LAN, ZHOU, Cupertino, 95014 (US)
(74) Representative: Bateman, Samuel Alec

(57) **Abstract**

Disclosed are methods, systems, and computer-readable medium to perform operations decoding, for a probe before talk (PBT) session, an initial control frame (ICF) indicating a request for coexistence feedback indicating a future unavailability start time and a future unavailability duration for a coexistence transmission; and encoding, responsive to decoding the ICF, an initial control response (ICR) frame comprising the coexistence feedback.

## Description

### CLAIM OF PRIORITY

This application claims priority under 35 U.S.C. §119(e) to U.S. Patent Application Serial No. 63/668,137, filed on July 5, 2024, the entire contents of which are hereby incorporated by reference.

### BACKGROUND

Many electronic devices communicate with each other using wireless local area networks (WLANs), such as those based on a communication protocol that is compatible with an Institute of Electrical and Electronics Engineers (IEEE) standard, e.g., the IEEE 802.11 standard (also known as "Wi-Fi"). A WLAN typically includes an access point that provides one or more stations (STAs) with access to another network, such as the Internet. There are many generations of the IEEE 802.11 standard, including 802.11ax (Wi-Fi 6) and 802.11be (Wi-Fi 7).

IEEE 802.11 is a packet-based protocol. Under this protocol, a transmitter, e.g., an access point (AP), packages control information or user data into a protocol data unit (PDU) in a physical layer convergence protocol (PLCP). The PLCP PDU (PPDU) includes a preamble and a data field, among other fields. After generating the PPDU, the access point may send the PPDU to a station connected to the access point. Communication from the access point to a station is referred to as the downlink, and the communication from a station to the access point is referred to as the uplink.

### SUMMARY

In an aspect, a method for wireless communication, by a client device, with an access point, includes decoding, for a probe before talk (PBT) session, an initial control frame (ICF) indicating a request for coexistence feedback indicating a future unavailability start time and a future unavailability duration for a coexistence transmission; and encoding, responsive to decoding the ICF, an initial control response (ICR) frame comprising the coexistence feedback.

In some implementations, including one or more of the other implementations described herein, the ICF further indicates a second feedback type in addition to the coexistence feedback, and wherein the ICR includes the second feedback type in addition to the coexistence feedback.

In some implementations, including one or more of the other implementations described herein, the second feedback type is requested as a common feedback.

In some implementations, including one or more of the other implementations described herein, the common feedback uses a reserved bit in an extremely high throughput (EHT) common information field.

In some implementations, including one or more of the other implementations described herein, the common feedback uses a reserved bit in a special user information field.

In some implementations, including one or more of the other implementations described herein, the second feedback type is requested as a per-user feedback.

In some implementations, including one or more of the other implementations described herein, the second feedback type includes one of a buffer status report (BSR), power saving information, or low latency feedback.

In some implementations, including one or more of the other implementations described herein, the ICR frame includes a multi-station block acknowledgement (M-BA) frame that is sent as a response to the ICF from the access point.

In some implementations, including one or more of the other implementations described herein, the M-BA frame indicates at least one or more of an unavailability start time or an unavailability duration of the coexistence feedback.

In some implementations, including one or more of the other implementations described herein, the M-BA frame comprises a BA information field comprising one or more per-association identifier (per-AID) traffic identifier (TID) information fields indicating the coexistence feedback in a BA bitmap subfield.

In some implementations, including one or more of the other implementations described herein, the one or more per-AID TID information fields each comprises an acknowledgement type field or a TID field that indicates a special per-AID TID information field for including the coexistence feedback.

In some implementations, including one or more of the other implementations described herein, the one or more per-AID TID information fields each comprises a fragment number field indicating a length of the coexistence feedback included in the BA bitmap subfield.

In some implementations, including one or more of the other implementations described herein, the one or more per-AID TID information fields each comprises a starting sequence number subfield indicating that a type of feedback is the coexistence feedback.

In some implementations, including one or more of the other implementations described herein, the BA bitmap subfield indicates the future unavailability start time, the minimum future unavailability duration, and a future unavailability applicable link bitmap.

In some implementations, including one or more of the other implementations described herein, the one or more per-AID TID information fields have an AID value of AID11, wherein the AID value of AID11 indicates that a general feedback is provided in the one or more per-AID TID information fields.

In some implementations, including one or more of the other implementations described herein, the one or more per-AID TID information fields have an AID value of AID11, wherein the AID value of AID11 indicates that the coexistence feedback is provided in the one or more per-AID TID information fields.

In some implementations, including one or more of the other implementations described herein, the ICF comprises a buffer status report poll (BSRP) trigger frame configured to solicit a multi-station block acknowledgment (M-BA) frame in a non-high throughput (non-HT) physical layer protocol data unit (PPDU) format, the M-BA frame including the coexistence feedback.

In some implementations, including one or more of the other implementations described herein, the BSRP trigger frame is addressed to a single station, and wherein a receiver address field indicates a recipient station medium access control (MAC) address.

In some implementations, including one or more of the other implementations described herein, the BSRP trigger frame is addressed to a single station, and wherein a transmitter address field indicates a transmitting station medium access control (MAC) address.

In some implementations, including one or more of the other implementations described herein, the BSRP trigger frame is addressed to multiple stations, and wherein a receiver address field indicates a broadcast address.

In some implementations, including one or more of the other implementations described herein, the BSRP trigger frame is addressed to multiple stations, and wherein a transmitter address field indicates a transmitting station medium access control (MAC) address.

In some implementations, including one or more of the other implementations described herein, the BSRP trigger frame includes a BSRP response PPDU field in a reserved bit, the BSRP response PPDU field indicating a type of a BSRP response.

In some implementations, including one or more of the other implementations described herein, the BSRP trigger frame includes a BSRP response PPDU field in a special user information field indicating a PPDU type of a BSRP response.

In some implementations, including one or more of the other implementations described herein, the BSRP trigger frame includes a CS Required field that is always set to a value to prevent subsequent transmissions from interference at a receiver regardless of an uplink length value set in the BSRP.

In some implementations, including one or more of the other implementations described herein, the BSRP trigger frame includes an uplink length field that indicates a feedback type indicated by a transmission operations (TXOP) holder.

In some implementations, including one or more of the other implementations described herein, the M-BA frame includes additional feedback that is unsolicited in the ICF.

In some implementations, including one or more of the other implementations described herein, the BSRP trigger frame includes an uplink length field that indicates a preferred feedback bitmap.

In some implementations, including one or more of the other implementations described herein, the BSRP trigger frame includes an uplink length field that indicates a length of the M-BA frame including a value of a L-SIG length field of a solicited trigger based PPDU or a non-HT PPDU.

In some implementations, including one or more of the other implementations described herein, a response PPDU rate/MCS field of a BSRP response PPDU indicates a data rate of the BSRP response PPDU.

In some implementations, including one or more of the other implementations described herein, the ICF comprises a buffer status report poll (BSRP) trigger frame configured to solicit the coexistence feedback and additional preferred feedback from transmitter operations (TXOP) holder.

In some implementations, including one or more of the other implementations described herein, the additional preferred feedback includes one of a buffer status report (BSR), power saving information, and low latency feedback.

In some implementations, including one or more of the other implementations described herein, the BSRP trigger frame indicates a special AID value to indicate one or more special user information fields that carry common feedback including the coexistence feedback.

In some implementations, including one or more of the other implementations described herein, the one or more special user information fields that carry common feedback are grouped after a user information field indicates the special AID value.

In some implementations, including one or more of the other implementations described herein, the BSRP trigger frame includes a resource unit allocation field that indicates a maximum bandwidth of a non-HT PPDU carrying a BSRP response.

In some implementations, including one or more of the other implementations described herein, the BSRP trigger frame includes a static/dynamic field that indicates that a transmission operations (TXOP) responder sends a BSRP response PPDU only when all subchannels indicated by the resource unit allocation field are idle.

In some implementations, including one or more of the other implementations described herein, the BSRP trigger frame includes a static/dynamic field that indicates that a transmission operations (TXOP) responder sends a BSRP response PPDU only when at least one subchannel indicated by the resource unit allocation field is idle.

In an aspect, an access point multi-link device configured to perform the method of any of the foregoing implementations or aspects.

A non-access point multi-link device configured to perform the method of the foregoing implementations or aspects.

In an aspect, one or more processors are configured to, when executing instructions stored in memory, perform any of the foregoing methods.

In an aspect, a non-transitory computer storage medium is encoded with instructions that, when executed by one or more processors, cause the one or more processors to perform any of the foregoing methods.

In an aspect, a system comprises one or more processors and one or more storage devices on which are stored instructions that are operable, when executed by the one or more processors, to cause the one or more processors to perform any of the foregoing methods.

In an aspect, an apparatus comprising one or more baseband processors is configured to perform any of the foregoing methods.

The details of one or more embodiments of these systems and processes are set forth in the accompanying drawings and the description below. Other features, objects, and advantages of these systems and processes will be apparent from the description and drawings, and from the claims.

### BRIEF DESCRIPTION OF THE FIGURES

FIG. 1 illustrates a block diagram of an example of electronic devices communicating wirelessly, according to some implementations.
FIG. 2 illustrates an example system including an AP MLD and non-AP MLD.
FIG. 3 illustrates an example buffer status report poll (BSRP) initial control frame (ICF).
FIG. 4 illustrates an example of an extremely high throughput (EHT) variant of a common information field.
FIG. 5A illustrates a special user information field of the ICF of FIG. 3.
FIG. 5B illustrates an example of an EHT user information field of the ICF of FIG. 3 for MU-RTS (multi-user request to send).
FIG. 5C illustrates an example of an EHT common information field of the ICF of FIG. 3 for MU-RTS.
FIG. 5D illustrates an example of a special user information field of the ICF of FIG. 3 for MU-RTS.
FIG. 6A illustrates an example of a common information field including a CS Required field.
FIG. 6B illustrates a flow diagram of an example method.
FIG. 7 illustrates an example of a EHT per-user information field format.
FIG. 8 illustrates example feedback options for the BSRP ICF by a trigger frame.
FIG. 9 illustrates example feedback provided in the special user information field of FIG. 8.
FIG. 10 illustrates an example user information field indicating resource unit (RU) allocation.
FIG. 11 illustrates an example user information field for non-high-throughput (non-HT) PPDU multi-user (MU) operations.
FIG. 12 illustrates an example ICF including a padding field.
FIG. 13 illustrates an example of a multi-user BA frame.
FIG. 14 illustrates an example of a special association identifier (AID) value in the AID traffic identifier (TID) information field for coexistence feedback.
FIG. 15 illustrates an example of a proposed special AID TID information field for coexistence feedback.
FIG. 16 illustrates a flowchart of an example method, according to some implementations.
FIG. 17 illustrates a block diagram of an example electronic device, according to some implementations.

### DETAILED DESCRIPTION

This disclosure describes systems, devices, methods, and processes for wireless communication (e.g., WI-FI 8 or 802.11bn) including an initial control frame (ICF), an initial control response frame (ICR), and multi-station block acknowledgement (M-BA) designs for probe before talk (PBT), where the ICF and ICR support coexistence feedback. For some configurations for wireless communication (e.g., for WI-FI 8), the protocol may support use of multi-station (multi-STA) BA for an initial control response (ICR) frame downlink and uplink when carrying feedback (such as an unavailability feedback). The protocol supports defining fields for the unavailability indication in multi-STA BA frames. The defined fields include an unavailability target start time field (TSF) at which the STA becomes unavailable, indicating a duration and resolution in a portion of the TSF. The defined fields include an unavailability duration field defined as the time during which the STA is unavailable.

When a user equipment (UE) is performing coexistence operations, there are two examples to report back to the access point (AP). In a first example, the UE sends the multi-STA BA as a response to an ICF from the AP. In a second example, the UE sends a multi-STA BA as a response to a downlink (DL) PPDU from the AP. The field configurations described herein are related to the first example.

In a single user (SU) case, the non-HT (duplicated) PPDU configuration provides improved network allocation vector (NAV) protection against legacy devices. A UE may decode the duration field in the medium access control (MAC) header (in the frame header) and determine that there is an ongoing transmission, and that the UE does not need to contend for access. In an example in which there are hidden nodes near to the UE, the UE determines that the AP will transmit something after the ICR frame, and the UE determines not to contend for that duration by transmitting and interfering with the transmission to the hidden node.

This disclosure also describes an ICF for a multi-STA BA that is carried as an ICR in a non-high-throughput (non-HT) duplicated PPDU format and that may also solicit trigger-based (TB) PPDU for a multi-user case. When the packet is sent in a non-HT example, the duplicated PPDU, which is replicated on multiple 20 megahertz (MHz) channels, may be decoded by any station, including legacy clients. For the TB-PPDU format, multiple stations are allocated resource units for sending the multi-STA BA.

Regardless of the particular configuration of the fields, the UE (or other client device) is able to report back to the AP the coexistence and availability information in response to the ICF. The AP may request an additional preferred feedback type, such as buffer status report (BSR). The feedback type does not restrict the UE (or client) on the feedback content. For example, the AP may request additional information such as the BSR with the coexistence information, requesting how much data is queued in the UE data queues. The AP may determine, from this information, how to allocate resources in the context of having the coexistence information in addition to the BSR (rather than as a substitute). The configurations of the ICF described herein enable the client to always be capable of sending given additional feedback information along with the coexistence information.

The ICF may enable the client to provide coexistence feedback regardless of how the AP requests the additional feedback. The preferred/requested feedback type does not restrict the client for feedback content. In an example, the AP may solicit the feedback as a common feedback. The client's signaling may be defined to solicit the feedback in a trigger frame of the ICF, such as a buffer status report poll (BSRP) or the multi-user request to send (MU-RTS) trigger frame of the ICF. The trigger frame may include a common information field and user information field. The common information field includes information that is common to all stations. The user information field includes the stationspecific information. In such a frame, there may be a bit in the common information field for indicating a request for BSR feedback if the AP is requesting the common feedback, the BSR, from all the stations. In another example, the AP may request feedback (such as BSR feedback, power saving feedback, or any other feedback) on a per-user basis inside every user information field. In either example, the client is configured to provide the coexistence unavailability feedback in the ICF in addition to the requested additional feedback. This includes examples in which the additional feedback includes other feedback such as power saving information. The foregoing feedback flexibility reduces a complexity for generation of the additional feedback information for being provided in the ICF along with the coexistence availability information.

The ICF may enable the client to provide feedback to the transmit opportunity (TXOP) responder. TXOP is available in QoS mode as part of enhanced distributed channel access (EDCA). The TXOP is a limited time period of contention-free channel access available to the channel-owning station. During such a period, the station may send multiple frames that belong to a particular access category. The ICF may carry information to indicate to the AP (or if the station is transmitting in the uplink), that the client may have an unavailability period soon. The client may signal to the AP (without being solicited) that the client or a peer device will have unavailability. A similar ICR configuration is possible for the AP to indicate to the station or client that the AP has a period of unavailability soon (e.g., in a downlink example).

This disclosure also describes multi-STA BA and PPDU formats for the ICF. In an example, the AP may use an existing trigger frame format such as BSRP or MU-RTS, or an enhanced version, to solicit feedback. The client responds with an enhanced version of the multi-STA BA that is described herein. A PPDU format is also defined for this example.

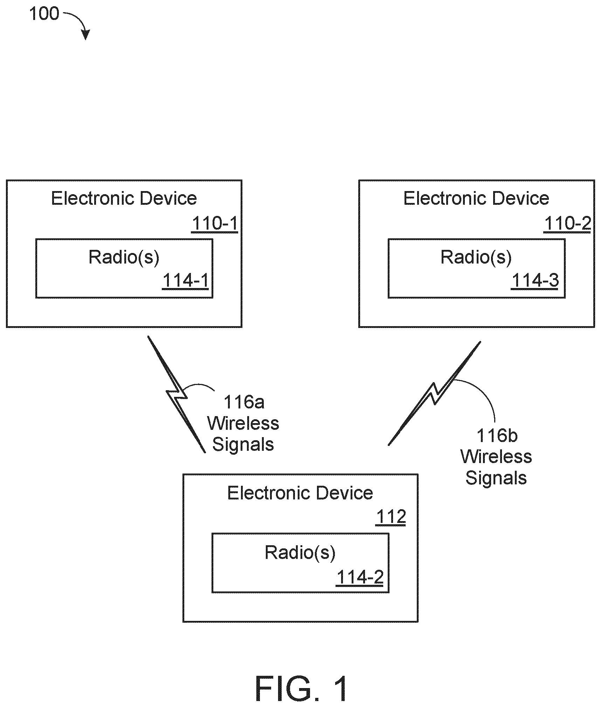

FIG. 1 illustrates a block diagram 100 of an example of electronic devices communicating wirelessly, according to some implementations. Notably, one or more electronic devices 110 (such as a smartphone, a laptop computer, a notebook computer, a tablet, or another such electronic device) and access point 112 may communicate wirelessly in a WLAN using an IEEE 802.11 communication protocol. Thus, electronic devices 110 may be associated with or may have a connection with access point 112. For example, electronic devices 110 and access point 112 may wirelessly communicate while detecting one another by scanning wireless channels, transmitting and receiving beacons or beacon frames on wireless channels, establishing connections (e.g., by transmitting connect requests), and/or transmitting and receiving packets or frames (which may include the request and/or additional information, such as data, as payloads). Note that the access point 112 may provide access to a network, such as the Internet, via an Ethernet protocol, and may be a physical access point or a virtual or "software" access point that is implemented on a computer or an electronic device. In this specification, electronic devices 110 are sometimes referred to as "recipient electronic devices" or "receiver stations."

Although the environment represented in FIG. 1 is provided as an example, in alternative implementations, different numbers and/or types of electronic devices may be present. For example, some implementations may include more or fewer electronic devices. As another example, in some implementations, different electronic devices may be transmitting and/or receiving packets or frames. In some implementations, multiple links may be used during communication between electronic devices 110.

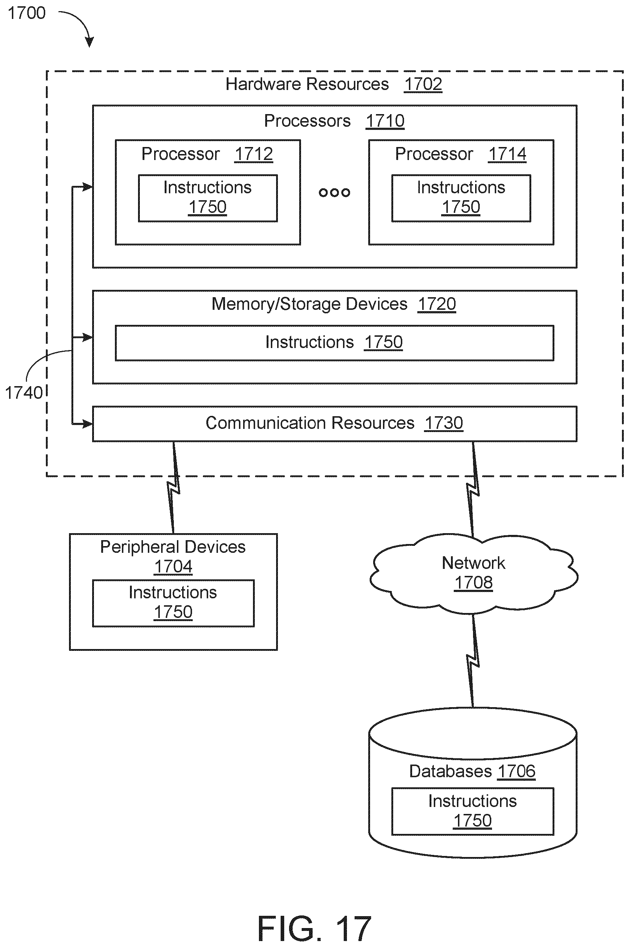

As described further below with reference to FIG. 17, electronic devices 110 and access point 112 may include subsystems, such as a networking subsystem, a memory subsystem, and a processor subsystem. In addition, electronic devices 110 and access point 112 may include radios 114 in the networking subsystems. More generally, electronic devices 110 and access point 112 may include (or may be included within) any electronic devices with networking subsystems that enable electronic devices 110 and access point 112, respectively, to wirelessly communicate with another electronic device. This may include transmitting beacons on wireless channels to enable the electronic devices to make initial contact with or to detect each other, followed by exchanging subsequent data/management frames (such as connect requests) to establish a connection, configure security options, transmit and receive packets or frames via the connection, etc.

As illustrated in FIG. 1, wireless signals 116a-b are communicated by one or more radios 114-1 and 114-2 in electronic device 110-1 and access point 112, respectively. For example, as noted previously, electronic device 110-1 and access point 112 may exchange packets or frames using a Wi-Fi communication protocol in a WLAN. Further, one or more radios 114-1 may receive wireless signals 116a-b that are transmitted by one or more radios 114-2 via one or more links between electronic device 110-1 and access point 112. Alternatively, the one or more radios 114-1 may transmit wireless signals 116a-b that are received by the one or more radios 114-2.

In some implementations, wireless signals 116a-b are communicated by one or more radios 114 in electronic devices 110 and access point 112, respectively. For example, one or more radios 114-1 and 114-3 may receive wireless signals 116a-b that are transmitted by one or more radios 114-2 via one or more links between the electronic devices 110-1 and 110-2, and the access point 112.

In some implementations, the access point 112 may group the electronic devices 110 into a target station set. The target station set concept comes from downlink multi-user transmission where the access point 112 may transmit to multiple stations simultaneously in one PPDU using Orthogonal Frequency Division Multiple Access (OFDMA) or multiuser (MU) Multiple Input Multiple Output (MU-MIMO). Here, the target station set is a set of stations that may simultaneously be served by the access point 112. The stations in the set do not need to share the same PHY parameters, such as MCS, number of streams, etc.

In some implementations, the access point 112 may simultaneously communicate with a plurality of electronic devices 110 using multiuser (MU) techniques, such as MU Multiple Input Multiple Output (MU-MIMO). In some examples, the access point 112 communicates with the electronic devices 110 using frequency multiplexing such that the access point 112 allocates each of the electronic devices a portion of the overall bandwidth. For example, to simultaneously communicate with four electronic devices over an 80 Megahertz (MHz) bandwidth, the access point 112 transmits a MU-PPDU over the 80 MHz bandwidth. The MU-PPDU includes a sub-PPDU for each of the four electronic devices, where each sub-PPDU (or sub-channel) is allocated 20 megahertz (MHz). The access point 112 may use the MU-PPDU to communicate with devices in the same target set, devices in different target sets, or a combination of both.

In some implementations, access point 112 and one or more electronic devices may be compatible with an IEEE 802.11 standard that includes trigger-based channel access, e.g., IEEE 802.11ax. In 802.11ax, Orthogonal Frequency Division Multiple Access (OFDMA) is used to enable simultaneous communications between the access point 112 and multiple electronic devices. OFDMA divides the available physical spectrum into multiple orthogonal sub-channels, or resource units (RUs), which may be allocated to different electronic devices (users). Under the standard, the access point 112 coordinates multiuser OFDMA by broadcasting a trigger frame which, among other things, allocates a RU to each participating electronic device. Each electronic device responds to the trigger frame by transmitting a PPDU to the access point 112 using the allocated RU. The trigger frame may also include power control information. The access point 112 may instruct all electronic devices 110 when to start and stop transmitting. Note that access point 112 and the electronic devices 110 may communicate with one or more legacy electronic devices that are not compatible with the IEEE 802.11 standard, such as devices that do not use multiuser trigger-based channel access.

In some implementations, processing a packet or frame in one of electronic devices 110 access point 112, or a combination of both, includes: receiving wireless signals 116a-b encoding a packet or a frame; decoding/extracting the packet or frame from received wireless signals 116a-b to acquire the packet or frame; and processing the packet or frame to determine information included in the packet or frame (such as data in the payload).

As discussed previously, one or more of electronic devices 110 and access point 112 may communicate with each other. Notably, access point 112 may transmit a PPDU that includes a preamble and a data field. In some implementations, access point 112 may be configured to use concatenated PPDUs (C-PPDUs), e.g., for low latency communications with receiver stations. A C-PPDU includes a plurality of component PPDUs, each of which includes a preamble and a data payload. As described in more detail below, the C-PPDU includes a plurality of component PPDUs. The first component PPDU is preceded by a first preamble called a "full preamble." The remaining component PPDUs in the C-PPDU are each preceded by respective preambles that are shorter in length than the first preamble. In some implementations, the access point 112 might not perform contention or receive a block acknowledgement (BA) before the plurality of component PPDUs are transmitted.

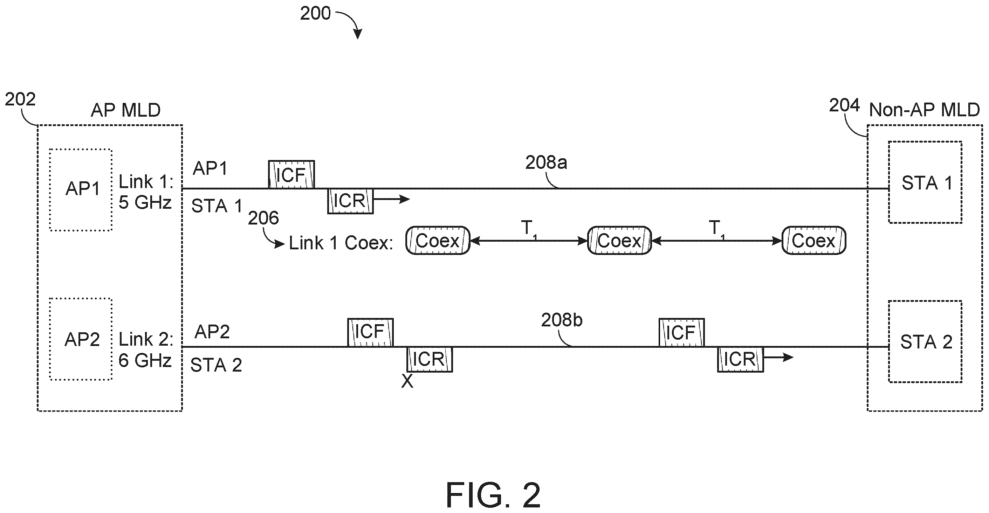

FIG. 2 illustrates an example system 200 including an AP MLD 202 configured to communicate with multiple stations of a non-AP MLD 204. Coexistence information 206 is transmitted on the link along with the ICR from the AP MLD 202 (for DL examples) or in the ICF from the non-AP MLD 204 (for UL examples). Each of the stations (STAs) of the non-AP MLD is configured to send ICF data to the AP MLD 202 to indicate the requested feedback data and also the coexistence unavailability information. The example system 200 includes a 5 gigahertz (GHz) link 208a and a 6 GHz link 208b.

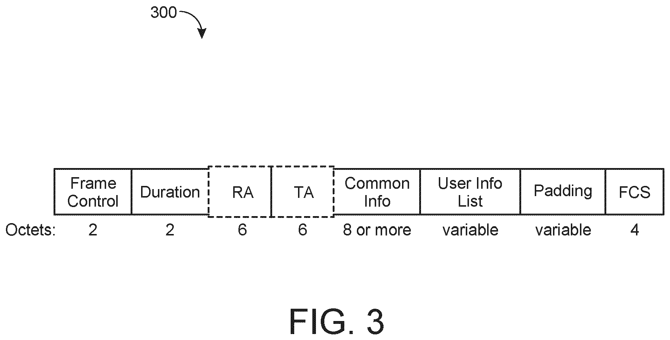

FIG. 3 illustrates an example ICF 300. The ICF 300 may be addressed to a single station. The ICF 300 includes a frame control field. The frame control field includes subfields indicating a protocol version, type and subtype. The frame control field also indicates information for a to-distribution system (DS), a from-DS, more-fragments, retry information, power management, and a protected frame. The ICF 300 includes a duration field that indicates a duration for coexistence unavailability. The ICF 300 includes receiver address and a transmitter address field, highlighted in FIG. 3. The ICF 300 includes a field for common information (for all STAs) and user-specific information (STA-specific information). After some padding, the ICF 300 includes a frame check sequence (FCS) (an error-detecting code).

On a given link (e.g., either 5 GHz link 208a or 6 GHz link 208b of FIG. 2), multiple stations may be associated with the AP (though only the single STA example is illustrated in FIG. 2). This may occur, for example, if multiple devices are communicating with the AP. In this example, the AP may solicit a particular station with a unicast signal (as illustrated in FIG. 2), or the AP may group multiple stations that are not part of the same MLD.

Generally, if the ICF 300 is addressed to a single station, the receiver address (RA) is set to the recipient STA MAC address and the transmitter address (TA) field is set to the transmitting STA MAC address. In some implementations, the RA field may be set to broadcast addresses. The client (e.g., a station) determines that the AP is targeting that station based on an association identifier (AID) indicating that station in the user information field of the ICF 300. The association ID (e.g., AID12) indicates that the particular targeted client (station) should respond.

If the BSRP ICF is addressed to more than one STA, the RA field is set to the broadcast address, and the TA field is set to the transmitting STA MAC address. For the multiple basic service set identifiers (BSSIDs), the TA field may be set to the transmitted BSSID (TxBSSID) if the AP transmits the BSRP ICF to stations associated with different BSSIDs. For example, if a device (e.g., a physical box) has multiple BSSIDs, one BSSID may be the main ID, and the other BSSIDs may be virtual IDs. For example, the main ID may represent a main network, and virtual IDs may represent guest networks, both using the same hardware. However, there is one AP that is transmitting on behalf of the others (e.g., indicating the management frame, the beacon, and so forth). If the AP is soliciting multiple stations of different BSS IDs from the same device, the AP sets the transmitter address only to the transmitted BSS ID address.

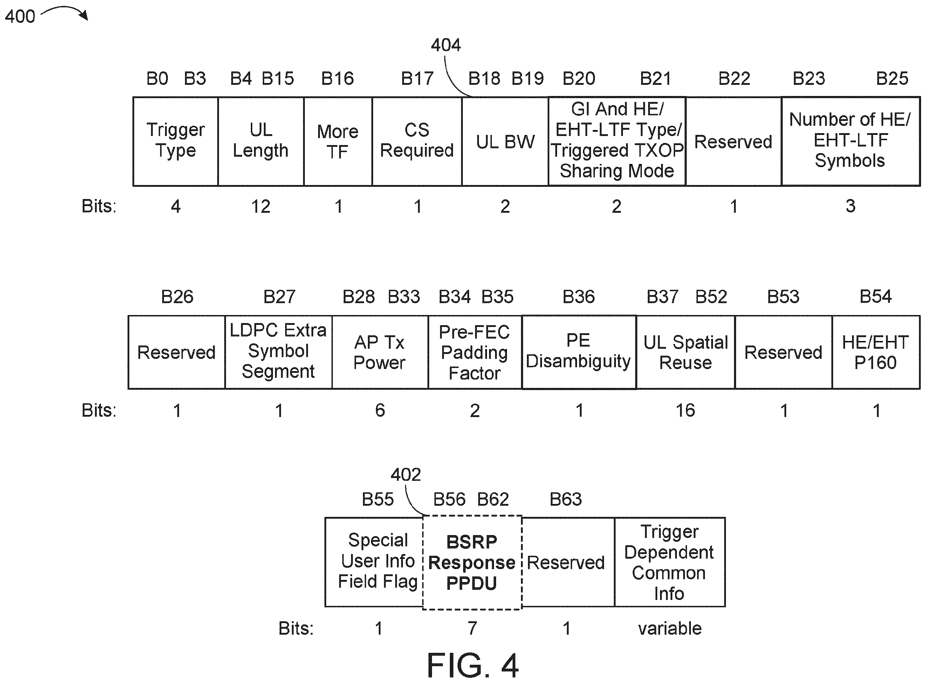

FIG. 4 illustrates an example of an extremely high throughput (EHT) variant of a common information field 400, such as the common information field previously described for ICF 300 of FIG. 3. The common information field 400 is depicted as broken into multiple rows for readability. The bits B0-B63 are labeled for the common information field 400. A number of bits for each subfield are illustrated below the respective subfield. The common information field 400 may be used by a device for indicating a BSRP trigger response PPDU setting, such as to indicate whether the response to the trigger frame is a non-HT-PPDU format or a trigger-based PPDU, as previously described. The common information field 400 includes subfields for bits B0-B64 when the common information field is a byte, including a BSRP response PPDU subfield having 7 bits.

For the common information field 400, the client (e.g., a station) may indicate a response type in the frame of the ICF of FIG. 2, described previously. The ICF 300 from the AP solicits the BSR, usually in a trigger based PPDU format. The BSRP is extended to solicit another frame including the multi-STA BA, which is sent in the non-HT PPDU (e.g., to pre-WIFI 4 devices such as 802.11a devices). The ICF is configured so that the legacy devices (such as 802.11a devices) may respond and understand the ICF format. When the AP sends the ICR to the station (e.g., the ICR block being sent to STA1 or STA2 as illustrated in FIG. 2), the AP indicates the expected format of the response. For example, the AP may indicate, in the ICR, whether to send the feedback in a trigger based PPDU feedback format or in a non-HT PPDU feedback format. The station indicates to the AP in the ICF (e.g., a station sending in the uplink to the AP) that the station requests the response of the ICR as a multi-STA BA and/or a non-HT-PPDU format. The BSRP response PPDU field 402 of the common information field 400 of the ICF 300 indicates the feedback format to the AP.

The BSRP response PPDU field 402 (e.g., using a reserved bit such as bits B56-B62) indicates the PPDU type of BSRP trigger response. If the BSRP trigger response frame is carried in the trigger-based PPDU (TB PPDU), the BSRP response PPDU field is set to 1. In some implementations, the BSRP PPDU field value may be set to 0 if the BSRP trigger response frame is carried in the TB PPDU. The AP may continue baseline behavior to use the TB PPDU for the MU case. If the BSRP trigger response frame is carried in non-HT (duplicate) PPDU, the BSRP response PPDU field is set to 1 (e.g., for the single user case). In this example, if the transmission is replicated using 20 MHz channels, the response is like the non-HT PPDU example. If the transmission is replicated using frequencies more than 20 MHz, the station sends a copy of the transmission on the 20 MHz because the station is replicating the transmission frequency domain.

While the reserved bits B56 to B62 are described in the forgoing example, other bits in the common information field 400 may indicate the BSRP response PPDU. In other words, using bits 56-62 for the BSRP response PPDU in the common information field via a reserved bit in the common information field 400 is one option of many. Other reserved bits (e.g., bit B22, B26, B53, B63, etc.) in the common information field 400 may be used for indicating the BSRP response PPDU. Bits 56 to 62 may indicate the feedback format and may be applicable to legacy devices including WIFI 6 and WIFI 7 devices. However, other reserved bits in the common information field 400 are potential bits for indicating this feedback type. For example, there may be one value that indicates that the response is a trigger based PPDU. Another value may indicate that the response is a non-HT duplicated PPDU, and so forth.

Additionally, there are other subfields that are reserved when the station uses the non-HT PPDU response. The reserved subfields in the common information field 400 include the GI and subcarrier spacing long training field duration (HE/EHT-LTF) type field, the number of HE-/EHT-LTF symbols field, the low density parity check (LDPC) extra symbol segment field, the AP transmit power field, the bit error rate before forward error correction (pre-FEC) padding factor field, the packet extension (PE) disambiguity field, the UL spatial reuse field, and the doppler subfield. The reserved subfields are used for the trigger-based PPDU. When the station is transmitting the non-HT (duplicate) PPDU or the HT-PPDU, these subfields are available. The subfields are otherwise used for indicating transmission power and/or a time that the AP is permitted to transmit. The AP may be soliciting multiple stations for transmissions, and the stations should align those transmissions so that the AP may successfully receive the transmissions. The use of the reserved bits may be for the downlink (AP to station) in the case of single user (SU) and/or multiple users (MU). The use of the reserved bits in the common information field 400 may also occur for uplink communication (e.g., from the station to the AP).

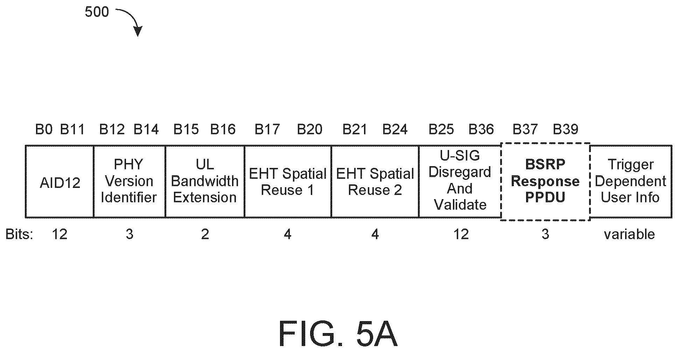

FIG. 5A illustrates a special user information field 500 (e.g., the user information field) of the ICF 300 of FIG. 3. The station may use the user information field 500 for indicating the BSRP trigger response PPDU setting, such as to indicate whether the response to the trigger frame is a non-HT-PPDU format or a trigger-based PPDU. After the common information field 400, a user information field 500 may indicate that the response type is either a TB-PPDU or a non-HT PPDU. The user information field 500 may include the special user information field defined in WI-FI 7. For example, the BSRP response PPDU field may be carried in the existing special user information field (e.g., AID = 2007). The AID12 subfield of the special user information field may be set to 2007. An EHT AP that includes the special user information field in a trigger frame may set a special user information field flag subfield to 0 and the special user information field may be placed immediately after the common information field. An EHT AP may set B54 in the common information field of a trigger frame to 1 if there exists any high efficiency (HE) variant user information field in the trigger frame. Otherwise, the EHT AP may set B54 in the common information field of the trigger frame to 0. An EHT AP may not transmit a trigger frame with B54 equal to 1 and B55 equal to 0 in the common information field of the trigger frame.

In another example, the user information field 500 may include a newly defined field. The special user information field is defined using a specific associated ID value. The station may use an existing reserved field AID or use a new reserved AID value. The selection of the reserved value may depend on an implementation requirement. For example, if the implementation is not sensitive to where a location is for the reserved field, then any AID value may work. A location of a newly defined special user information field 500 may be, for example, after the legacy special user information field. In some implementations, the UE may toggle a reserved bit to indicate that it is an ultra-high reliability (UHR)-variant special user information field 500.

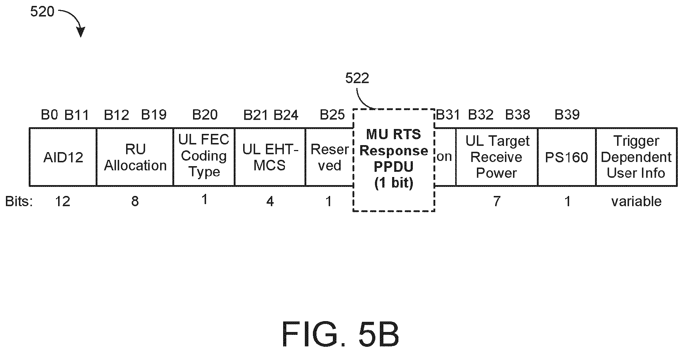

FIG. 5B illustrates an example of an EHT user information field 520 of the ICF 300 of FIG. 3 for MU-RTS. The enhanced MU-RTS trigger frame may include the following fields. A MU-RTS subfield 522 is a response PPDU type field which indicate whether the response to the MU-RTS trigger frame is a CTS (e.g., value 0) or M-BA (e.g., value 1). The MU-RTS subfield 522 is illustrated overlaying the user information field 520 because the field may be in any reserved field of the user information field 520. Additionally, the MU-RTS subfield 522 may be included in the common information field 530 or a special user information field 540, subsequently described. The feedback may include any feedback from the TXOP holder to the TXOP responder. Either per-user feedback for or common feedback may be provided. The common information field 530 or user information field (e.g., a special user information field 540) may be used, similar to the BSRP trigger frame described herein.

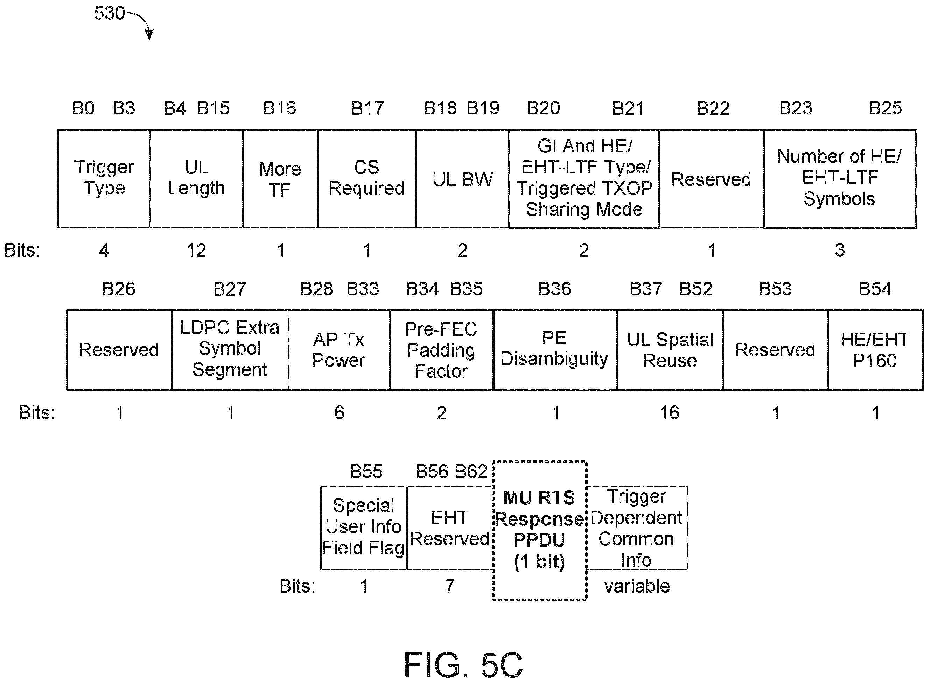

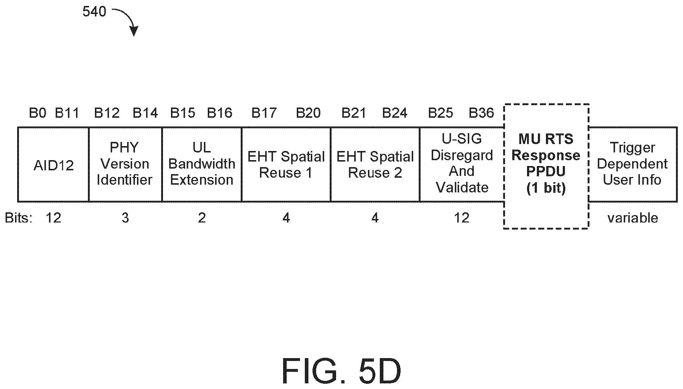

FIG. 5C illustrates an example of an EHT common information field 530 of the ICF 300 of FIG. 3 for MU-RTS. The common information field 530 is depicted as broken into multiple rows for readability. The bits B0-B63 are labeled for the common information field 530. A number of bits for each subfield are illustrated below the respective subfield. FIG. 5D illustrates an example of a special user information field 540 of the ICF 300 of FIG. 3 for MU-RTS. The MU-RTS frame may be used for the ICF. The MU-RTS trigger frame may solicit a clear to send (CTS) frame. For UHR, the MU-RTS trigger frame may be used as a ICF and hence solicit feedback. The response of the MU-RTS in this case may be a multi-STA BA, generally in a single user operation. The multi-STA BA may be sent in a non-HT PPDU format.

The feedback or preferred feedback requested may include the common information field 530 or the user information field (e.g., a special user information field 540), similar to the BSRP trigger frame 800 described herein. The MU-RTS includes many reserved bits and may use either the common information field 530 or the user information field (e.g., a special user information field 540) for the feedback.

The MU-RTS includes padding based on a TXOP responder requirement indicated in management level signaling. The MU-RTS may also define the response length similar to the BSRP. In other cases, the response length may be defined through management level signaling. The BSRP trigger frame 800 may also be defined through management level signaling.

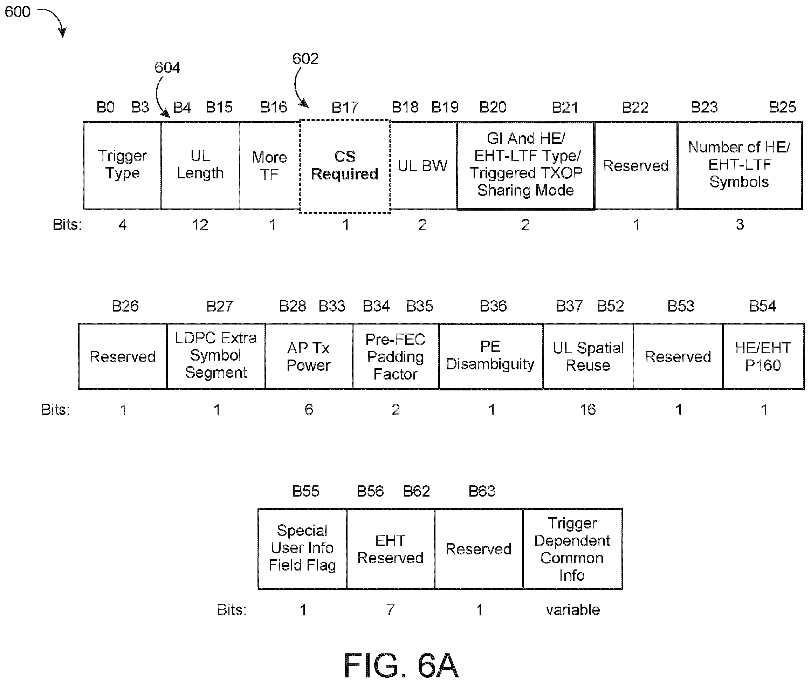

FIG. 6A illustrates a common information field 600 including a CS Required field 602 that is used for a single user (SU) operation. The common information field 600 is depicted as broken into multiple rows for readability. The bits B0-B63 are labeled for the common information field 600. A number of bits for each subfield are illustrated below the respective subfield. The CS Required field indicates whether the station(s) (that act as TXOP responder to the transmitted ICF) shall check if the channel is busy before the station (e.g., STA 1 or STA 2 of the non-AP MLD 204 of FIG. 2) responds to the AP (e.g., the AP MLD 202 of FIG. 2). When the BSRP trigger is used as the ICF, the common information field 600 may be set to indicate that the station shall check if the channel is busy to prevent the TXOP holder from transmitting and therefore prevent interference.

When the client (e.g., the station) determines that the channel is busy, the station does not respond if the CS required value is set to "1" in the soliciting trigger frame that carries the CS required field. The CS required field in the MU-RTS is always set to 1. Setting the CS required to 1 helps protect the subsequent transmission from interference at the receiver side (e.g., for DL transmission). This is contrasted with setting the CS required field to indicate no need to check if the channel is busy before responding to the trigger frame (e.g., set to "0") or set to 1 depending on a length of the response. Rather than determining the length of the response, the responding station sets the CS required field value is set to 1 to indicate to the responding station the requirement to check if the channel is busy before responding and prevent such interference when the AP transmits.

To avoid the interference, the responding station (e.g., client) may check whether the channel is busy. If the station that is addressed by the trigger frame determines that the channel is busy, the station does not respond. If there is no interference, the AP may continue with transmission. If there is interference (e.g., a signal is above a particular threshold), the responder does not respond. In other examples, the responding STA acting as a TXOP responder may inform the TXOP holder (e.g., the AP) that there is interference by sending a response frame (e.g., multi-STA BA frame) that carries an indication that the receiver experienced a busy channel or interference and expects interference if the TXOP holder (e.g., the AP) initiates a subsequent transmission. In this example, the AP determines that there is some interference happening and drops the downlink data frame. However, in some implementations, the CS required value may be toggled, as is performed in legacy devices.

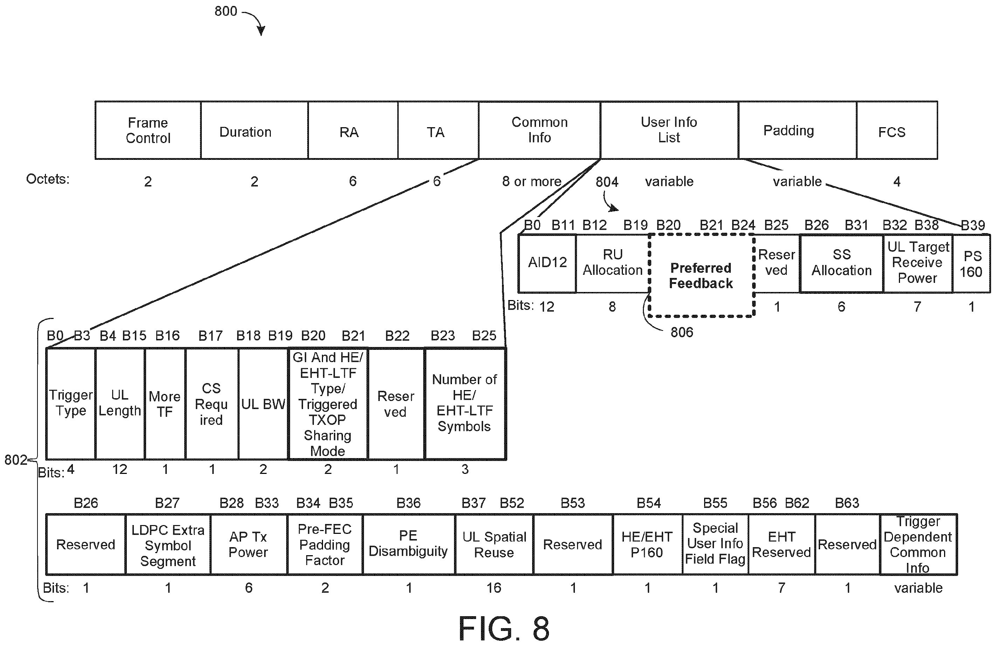

For the BSRP trigger frame 800 (described in relation to FIG. 8), the AP as a TXOP holder may not always decide whether to set CS required to 0 or 1. In an example, the UL length in BSRP is set to a value less than or equal to 76. In this example, when the BSRP trigger frame 800 is used as the ICF, the client may use a same rule as for the MU-RTS trigger frame and always set the CS required field to 1 (e.g., for DL transmission). As previously indicated, the CS required field in the regular BSRP may be set to either 0 or 1 depending on the length of BSR. In some implementations, the client may follow the existing baseline rule related to the UL length field value. However, for the SU case where the solicited PPDU format is non-HT, the UL length subfield 604 (reserved) may not be used in the BSRP, or the UL length field may be repurposed, in this case the CS required field may be set using other rules than the legacy UL length rules. For example, the CS required field may be set based on the number of octets in the response frame instead of response time. In other cases, the CS required may always be set to 1, regardless of the response length. In some implementations, a rule to determine to set CS required is set to 1 based on whether the TXOP holder (e.g., AP or non-AP station) determines to perform a subsequent transmission after the ICF and the ICR transmissions (e.g., multi-STA BA). If the ICF solicits an ICR without a subsequent data transmission, the CS required field may be set to 0. The UL length field may be set according to the Duration/ID field in the ICF. For example, the UL length field indicates a response length that is less than or equal to the value of the Duration/ID field. If the UL length field is reserved, the Duration/ID field value may be used to limit the ICR length.

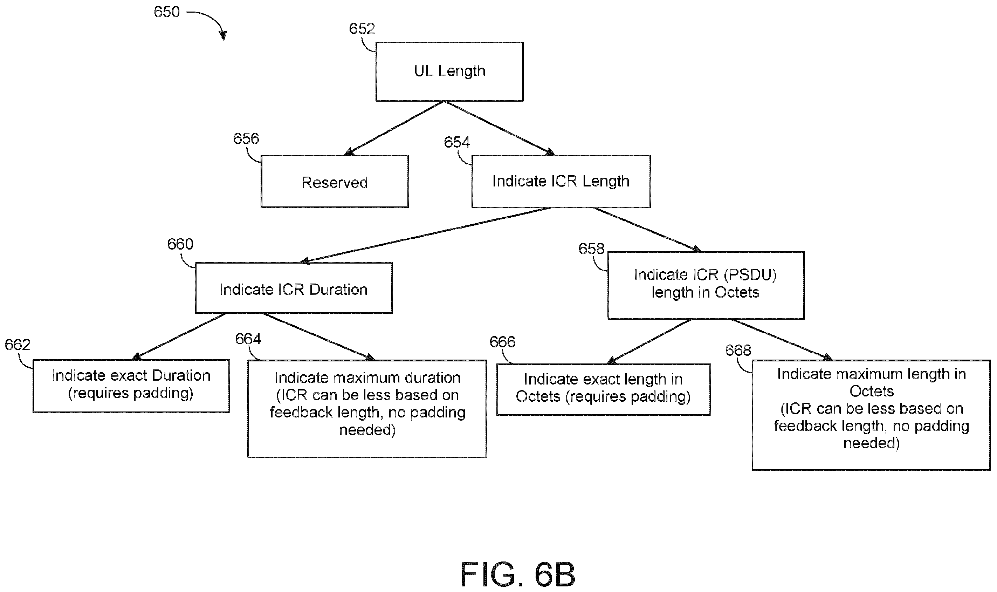

FIG. 6B illustrates an example decision tree 650 for a method of single user operation, if the BSRP indicates the solicited ICR response in non-HT PPDU format. The UL length field 652 in the ICF may be configured as follows. In a first option, the UL length subfield of the common information field of the ICF may indicate (654) the (maximum allowed) solicited non-HT PPDU duration (e.g., similar to an 802.11ax TB PPDU), if the UL length field is not reserved (656). The STA determines (658) a corresponding L-SIG length field value (e.g., the number of octets of the PLCP service data unit (PSDU)) or the ICR duration (660). In some implementations, the L-SIG rate in the ICR may be implementation specific. In some implementations, the 6 Mbps rate limit for the ICR may not be needed as long as a basic rate is used and understood by a third party STA. In a second option, the ICF indicates, in the UL length subfield, a number of octets (e.g., an exact PSDU length 666) of the PSDU carried in the solicited non-HT PPDU or a maximum allowed (a maximum length 668) number of octets of the PSDU carried in the solicited non-HT PPDU. In the non-HT PPDU, the L-SIG length field indicates the PSDU length in octets. In some implementations, a variable rate may be used. The variable rate may be implementation specific. The variable rate may be based on control response rates legacy rules. The TXOP holder plans transmission based on a lowest rate, in this example, to reserve the TXOP duration.

The responder configures the ICR based on the UL length designs described previously. In a first example, the responder may respond with an exact PPDU duration (662) or exact PSDU length (666) that meets the required UL length indicated in the ICF, which may include padding. In another example, the responder may transmit the available feedback based on the maximum duration (664) or the maximum length (668) without padding and without exceeding the UL length indicated in the ICF. The ICR duration or length may be less than the maximum.

The UL length subfield 604 may be repurposed for indicating a preferred feedback type by the TXOP holder, such as whether the response to the trigger frame is a non-HT-PPDU format or a trigger-based PPDU. For an MU example, the UL length subfield 604 of the common information field indicates the value of the L-SIG length field of the solicited HE TB PPDU. For the SU example, the ICR (M-BA) may be carried in a non-HT PPDU format.

When the UL length subfield 604 is reserved, the M-BA may also include unsolicited feedback other than coexistence unavailability feedback, which increases the response length. For each per-AID TID information field of size 12 octets (e.g., 8 octets in the feedback information field), the response length is increased by 16 microseconds (µs) at 6 megabits per second (Mbps). A client may report up to 8 TIDs. In the QoS control field there are 2 octets (4 bits for TID and 1 octet queue size value). The BSRP may use the TID aggregation limit to limit the BSR length. For 8 TIDs, the M-BA response duration may be increased by up to 85 µs, assuming a 4 octet feedback information field in each per-AID TID information field. The duration may be planned by the TXOP holder in advance when sending the ICF. Table 1 includes example lengths.

**Table 1: Lengths for the UL Length subfield for different feedback information field sizes.**

| Feedback Information Field Size (Octets) | Per-AID TID Information Field Size (Octets) | Additional Per AID TID Information Duration at 6 Mbps |
|---|---|---|
| 2 | 6 | 8 microseconds |
| 4 | 8 | 10.6 microseconds |
| 8 | 12 | 16 microseconds |

In some implementations, if the UL length subfield 604 is not reserved, the UL length field may be repurposed to indicate a preferred feedback bitmap (e.g., BSR) to guide the TXOP responder as to how to construct the M-BA content. In some implementations, other reserved fields in the common information field 600 (for the SU case) may be used for the referred feedback bitmap. The preferred feedback bitmap may be used with the UL length subfield 604, as subsequently described.

The TXOP holder may use UL length field to indicate the M-BA length. The UL length subfield of the common information field 600 indicates the value of the L-SIG length field of the solicited TB PPDU or non-HT PPDU. For the example of the non-HT PPDU, the L-SIG length field corresponds to the M-BA frame length (PSDU) in octets.

The M-BA may be transmitted using 1 spatial stream. The rate of the M-BA transmission may follow a legacy rule for the legacy rules for control response frame. For example, the rate is defined to be the highest rate in the *BSSBasicRateSet* parameter that is less than or equal to the rate of the previous frame (e.g., the ICF). In some implementations, the client may indicate the rate/MCS in the ICF 800. In other cases, the M-BA rate may be implementation specific.

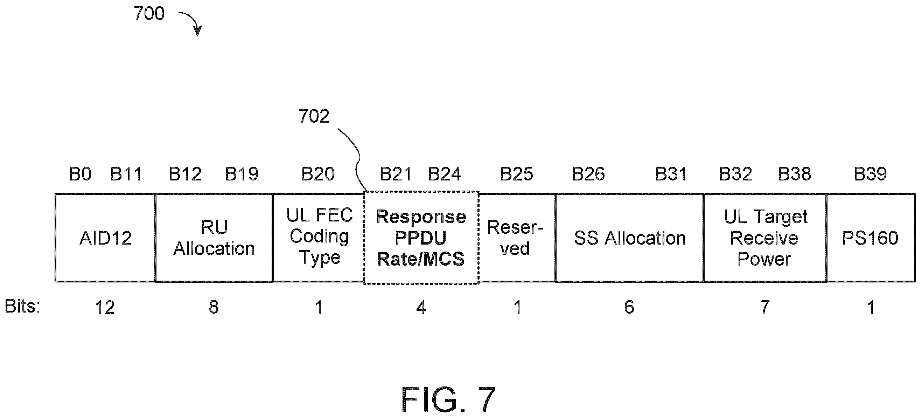

FIG. 7 illustrates an example of a EHT per-user information field 700 format including a response PPDU rate/MCS field 702. When the selected BSRP response PPDU is a non-HT PPDU, the response PPDU rate/MCS field 702 indicates the data rate of the response PPDU. There are two examples for indicating the data rate. In some implementations, the multi-STA BA response of the BSRP or MU-RTS trigger frame may use a fixed rate (e.g., a 6 Mbps fixed rate). The fixed rate may be pre-defined (e.g., see Table 2). For the single user ICF case, the TXOP responder may avoid the fixed rate restriction. This rate of the ICR (e.g., multi-STA BA) may be indicated in the ICF or may be implementation specific or variable rate based on legacy control response frame rule or newly defined rules. In some implementations, the rate may be determined by the transmitter. For example, the transmitter may indicate that the response should follow a configured MCS. Example rates for the CTS response of the MU-RTS are illustrated in Table 2.

**Table 2: Values of the RATE field for MU-RTS.**

| R1-R4 | Rate (Megabits per second, 20 Megahertz Channel Spacing) |
|---|---|
| 1101 | 6 |
| 1111 | 9 |
| 0101 | 12 |
| 0111 | 18 |
| 1001 | 24 |
| 1011 | 36 |
| 0001 | 48 |
| 0011 | 54 |

Other fields in the EHT variant user information field 700 may be reserved when the BSRP response PPDU is a non-HT PPDU. In an example, these other fields may be reserved in the EHT for a single user transmission because the transmitter does not require some fields, such as the uplink receive power field, which are used for MU transmissions.

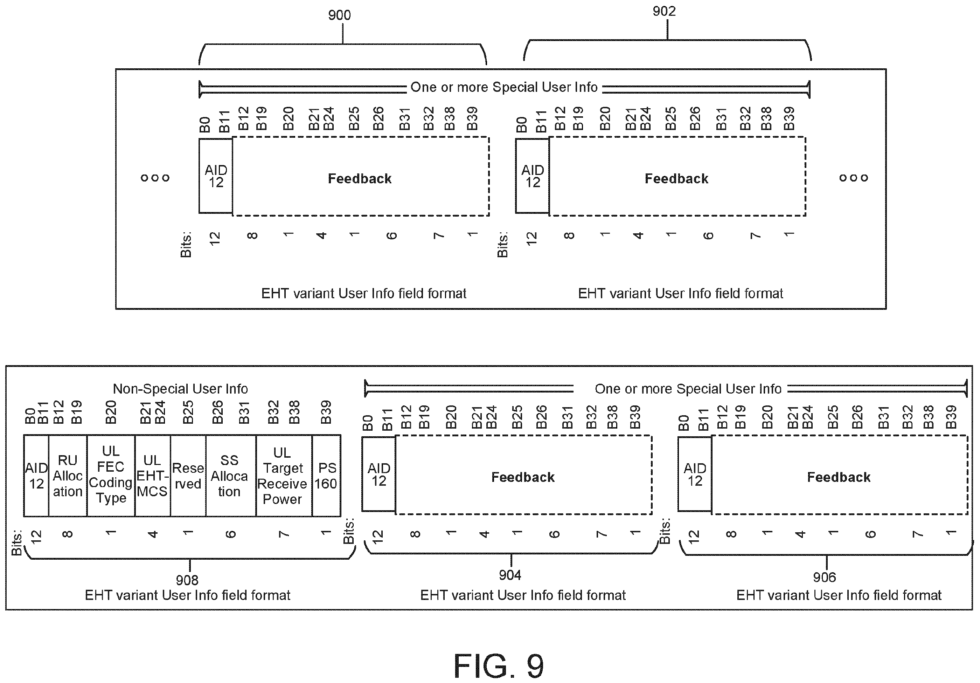

FIG. 8 illustrates feedback options for a BSRP ICF 800 including a trigger frame, such as for an ICF that includes the user information field 700 of FIG. 7 (e.g., illustrated as user information field 804 in FIG. 8). The BSRP ICF trigger frame 800 (also called ICF 800) may indicate the preferred feedback from a station. The ICF 800 may indicate other feedback, such as coexistence feedback, or request the feedback in a preferred feedback field 806. For example, the ICF may request, from the clients, the type of feedback needed. The preferred feedback information/request may be included in the per-user (e.g., per station) information field 804 or a special user information field (e.g., as described in relation to FIG. 9) for common feedback among STAs.

In some implementations, if the AP selects per-user feedback (e.g., per station feedback), the AP may indicate in the user information field 804, for that station in which the AP identified the station (e.g., by the AID such as AID12). If the AP selects common feedback, the AP may add an additional user information field called a special user information field (e.g., user information fields 900, 902 of FIG. 9). The special user information field may carry the preferred feedback information provided for all stations or requested for all stations, as described in relation to FIG. 9.

The ICF 800 includes a common information field 802 and a user information field 804, as described previously. In the common information field 802, a TXOP holder (e.g., an AP in this case) may indicate additional preferred feedback by the client (e.g., a BSR). The feedback may be indicated in the preferred feedback field that may carry a bitmap. The feedback may be in the user information field 804 (e.g., per-STA feedback). An additional user information feedback field 806 may be provided in the multi-user example for the same client or a special user information field for common feedback among STAs. The length may be adjusted as needed based on the feedback. For the single user example, the common information field 802 may be used because there are reserved bits available for the feedback indication, such as B22, B26, B53, B63, and so forth.

FIG. 9 illustrates details for the feedback provided in the special user information field, such as user information field 804 of FIG. 8. A TXOP holder (AP in this example) may carry feedback to the TXOP responder. The feedback may include the coexistence feedback, TID of the DL traffic for this client, and so forth. Based on current signaling design for unavailability information, the feedback may use 4 or 5 octets to indicate an unavailability start time and unavailability duration. To carry these octets for carrying the feedback, there may be two special user information fields 900, 902. The special user information fields 900, 902 may carry the same AID12 value and may be placed after each other in the ICF (e.g., ICF 800 of FIG. 8). The AID12 value may indicate that there are special user information fields included in the ICF that carry common feedback. The user information fields 900, 902 may be carried in the per user information field (e.g., per-STA feedback) in a single user example because there are reserved bits available.

In some implementations, the feedback may be carried in a special user information field as follows. For common feedback among STAs, a special AID12 value may be used. For the per-STA feedback, one or more user information fields 904, 906, etc. may be used. The order (grouping) of the special user information fields may be placed directly after the non-special user information field 908 that is set to the special STA AID value (e.g., AID12), which improves efficiency. The STA may be identified with another AID12 value (set to STA AID value) after AID12 value that is set to a special value. In an example, when a user information field where the AID12 field is set to AP ID of an AP participating in a Co-TDMA procedure, the user information field has a format in which the AID12 field is 12 bits, the feedback type field is 4 bits, and the feedback information field is 24 bits. The feedback type field indicates the type of feedback carried in the feedback information field. The feedback type field is set to 3 for a Co-TDMA procedure. Other values of the feedback type field are reserved. The feedback information field includes feedback corresponding to the type indicated in the feedback type field. When the feedback type is set to 0, the unavailability target start time field is 10 bits and the unavailability duration field is 10 bits, and 12 bits are reserved. The unavailability target start time subfield indicates the value of the upper 10 bits of the TSF (TSF [15:6]) at the time when the STA transmitting the multi-STA block ack frame becomes unavailable. Then unavailability target start time field is larger than the TSF value at the end of the PPDU that carries the feedback, except that this field is reserved (e.g., is invalid and ignored by the receiver) if the unavailability duration subfield is equal to 0. Then unavailability duration field indicate the duration in units of 64 microseconds over which the STA transmitting the multi-STA block ack frame is unavailable, except that a value of 0 indicates that the STA is available, and the value of 1023 indicates that the STA is unavailable for an indefinite duration of time.

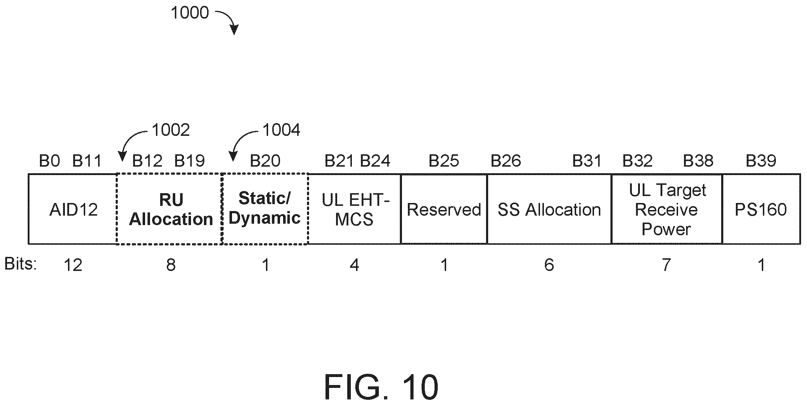

FIG. 10 illustrates a user information field 1000 indicating resource unit (RU) allocation and static or dynamic bandwidth information for the BSRP ICF (e.g., ICF 300, 800 etc. as previously described). There are two types of information for bandwidth description, including the uplink bandwidth (e.g., uplink bandwidth field 404 of common information field 400 of FIG. 4) and the RU allocation. The RU allocation indicates a bandwidth for transmissions of the client. The uplink bandwidth field 404 indicates that the trigger frame is soliciting a transmission bandwidth (e.g., an 80 MHz transmission). The RU allocation field 1002 indicates where the client should respond within that bandwidth (e.g., within that 80 MHz transmission). The RU allocation field indicates the maximum bandwidth allocation of the non-HT PPDU. When the BSRP response PPDU indicates non-HT PPDU, the RU allocation field 1002 indicates a maximum or exact bandwidth of the non-HT PPDU carrying the BSRP response. In other cases, the UL BW field of the common information field may be used either separately or with the RU allocation field to indicate the maximum or exact bandwidth of the response frame.

When the maximum bandwidth is defined, the TXOP holder may indicate two modes of operation in the ICF. The TXOP holder includes the station that contends and wins the TX operation, which may include an AP or a STA. In this example, the TXOP holder in the ICF may indicate a static or dynamic bandwidth operation (e.g., in the static or dynamic field 1004).

When the static or dynamic field 1004 is set to 0, indicating static operation, the TXOP responder sends the BSRP response PPDU (e.g., the multi-STA BA) when all the sub-channels indicated by the RU allocation field 1002 are idle. For example, if the maximum bandwidth is 80 MHz, including a primary 20 MHz band and secondary 20 MHz bands (or primary 40 MHz, secondary 40 MHz, etc.). In this example, the TXOP responder sends the BSRP response PPDU only when all the subchannels are idle (e.g., each 20 MHz or 40 MHz subchannel). Else, the TXOP does not respond if one of the subchannels is not idle, even if the other subchannels are idle. For example, if three of the 20MHz subchannels are idle but one subchannel is occupied, the TXOP responder does not respond with the BSRP response PPDU feedback. The detailed STA behavior is the same as the legacy STA behavior with the static bandwidth signaling operation.

When the static or dynamic field 1004 is set to 1, indicating dynamic operation, the TXOP responder sends the BSRP response PPDU when at least one sub-channel among sub-channels indicated by the RU allocation field 1002 is idle. For example, if a single 20 MHz subchannel is idle, the TXOP responder sends the BSRP response PPDU. The detailed STA behavior is the same as the legacy STA behavior with the dynamic bandwidth signaling operation. In some implementations, the client may indicate static or dynamic bandwidth using a scrambling sequence similar to legacy dynamic bandwidth operation.

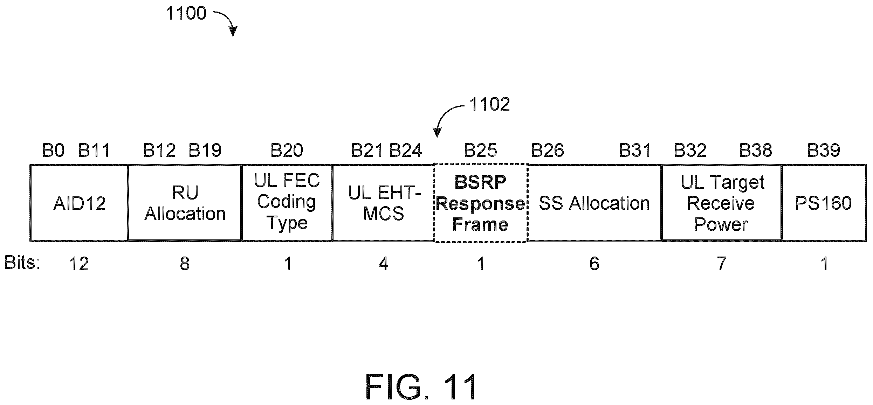

FIG. 11 illustrates a user information field 1100 for a non-HT PPDU multi-user (MU) example. For a multi-user example, there are two options in legacy WI-FI behavior. When the AP allocates a MU transmission it a time, the AP allocates an uplink length (or time) that indicates to the client how much transmission time is permitted to provide information to the AP. The client may aggregate information.

In a first option, the AP, in the BSRP response frame field 1102, instructs the client to select a response frame in the allocated UL length if the client may fit the response in that UL length. This is a flexible option that allows the client to select the response frame. When the BSRP response PPDU is TB PPDU, the BSRP response frame field does not restrict the frame type carried in the BSRP response PPDU. The BSRP response frame type field is either not used, or if used provides a preference by the AP for BSR. For example, more bits may be used for the preferred feedback type. In other words, if the client has more information and it may fit within the uplink length, then the client may respond back to the AP, which is consistent with legacy client behavior for indicating the feedback frame.

In a second option, the AP, in the BSRP response frame field 1102, tells the client what the exact response frame should be. The BSRP response frame field indicates the frame type carried in the BSRP response PPDU. This is similar to the preferred feedback field 806 described previously, but more restrictive in that the exact frame is indicated. The client may therefore include coexistence feedback in addition to legacy feedback (e.g., the BSR) used for the AP to schedule the client transmission. The BSRP response frame type field is set to 0 to solicit the regular BSR frame (e.g., QoS Null). The BSRP response frame type field is set to 1 to solicit the multi-STA BA carrying the coexistence information.

For signaling, the BSRP response frame field 1102 may be carried in the EHT variant user information field (B25) of the user information field 1100 or in a special user information field, such as user information fields 900, 902 described in relation to FIG. 9. For the special user information field, the AP may identify the station with another AID12 value (set to the STA AID value) after the AID12 value is set to a special value. In some implementations, the AP may order the special user information fields (e.g., user information fields 904, 906, etc.) to be directly after the non-special user information field 908 that is set to the station AID value.

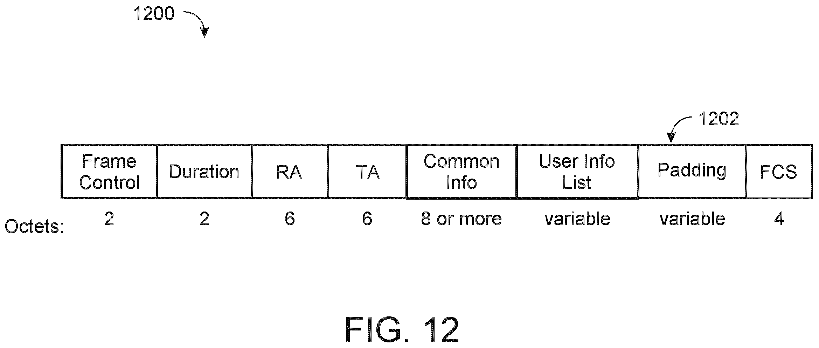

FIG. 12 illustrates an example ICF 1200 including a padding field. The ICF 1200 may be similar to the ICF 300 of FIG. 3, the ICF 800 of FIG. 8, and so forth, previously described. A TXOP holder may require padding in the M-BA to process unavailability information in the M-BA especially if it impacts the current TXOP. There may be defined a per-AID TID information field 1202 for padding, in this case, in a M-BA. In some implementations, if the AP indicates *MinTrigProcTime* through the trigger frame MAC padding duration, the STA that sends the BSRP ICF to the AP may perform the padding mechanism.

The BSRP ICF NAV timeout is now described. A third party STA that receives the RTS or MU-RTS but does not receive the CTS response may ignore the NAV set by (MU)-RTS after a *NAVTimeout* duration (e.g., defined as *2xaSIFSTime + CTS_Time + aRxPHYStartDelay + 2xaSlotTime).* To enhance such functionality for the BSRP trigger frame (e.g., a NAVTimeout) to the BSRP trigger frame would benefit ultra-high reliability stations (legacy STAs do not follow the *NAVTimeout* for BSRP trigger frame). To add such functionality for from ultra-high reliability, a transmitter may configure the BSRP trigger frame as follows. The UL length is carried in the BSRP trigger frame. The UL length carries the number of the ICR octets, a third party STA will use the UL length or other field carried in the BSRP trigger frame and the control response rate defined for ICR determine the *ICR_Time* and eventually *NAVTimeout* duration. The control response rate may be fixed (e.g., 6 Mbps) or variable rate subject to additional rules such as the Control Response Frame rules or indicated in the BSRP frame itself. In this case, the *NAVTimeout* may be calculated based on the *ICR Time* as follows: the *NAVTimeout = 2xaSIFSTime + ICR_Time + aRxPHYStartDelay + 2xaSlotTime.* The UL length in the BSRP trigger frame may be used to calculate the *ICR_Time.* This calculation may also apply to other ICF types.

In an aspect, when an AP receives BSRP non trigger based (NTB) frame with unavailability information from non-AP STA, the AP responds with M-STA BA frame as described in the following. An ack type field is set to 1, and a TID field (of the AID TID information field) is set to 13, representing the ICR context of the per AID TID information field. In this example, the block ack starting sequence control and feedback fields are not present in the M-STA BA frame.

In some implementations, some APs still schedule based on the BSR, and an AP may request the BSR to schedule the UL. A client that is having a coexistence session may need to report both BSR and coexistence information. In addition, a client may want to report other information that is available in the A-control field. In some implementations, the client aggregates M-BA and QoS Null frame with A-control. The client may use the per AID TID information field to report A-Control functionalities. For BSR, the queue size subfield in the QoS Control field is used to report per TID BSR. In this case, the A-Control is configured to carry per TID queue size information.

In some implementations, when the M-BA is sent in response to DL PPDU, the client may increase the size of the M-BA by incorporating additional feedback. The increased size of the M-BA may impact the TXOP limit of the AP. To handle the increased size, the feedback is limited in size a maximum value that may be added by the STA in unsolicited fashion. As a result, the AP, as a TXOP holder, may configure the TXOP accordingly.

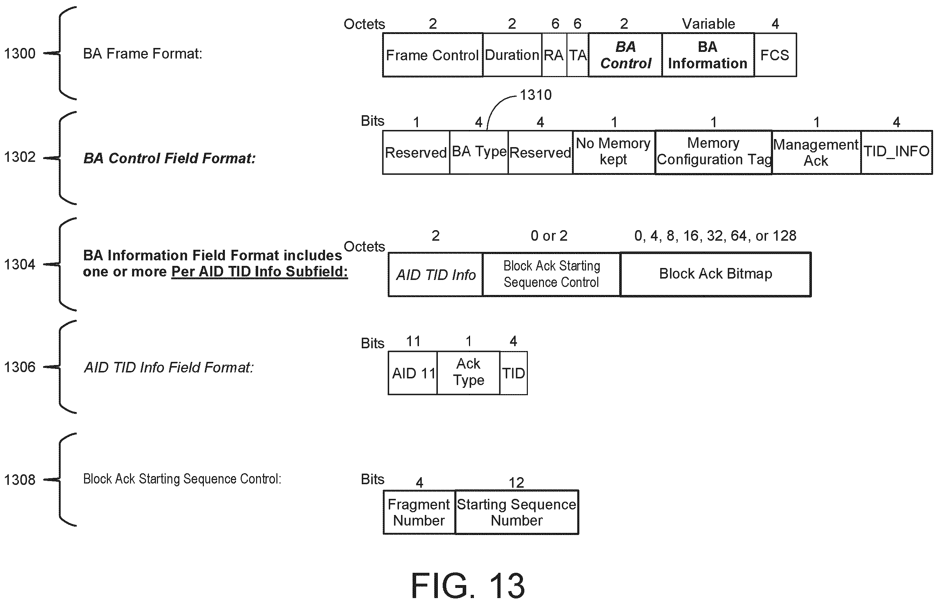

FIG. 13 illustrates an example of multi-user BA frame 1300. The BA frame 1300 includes a BA control field 1302, a BA information field 1304 including one or more per-AID information subfields, an AID TID information field 1306, and block acknowledgement starting sequence controls 1308. The multi-user BA frame 1300 indicates a duration, RA, TA, and FCS, in addition to the BA control field 1302 and the BA information field 1034.

The multi-STA BA for including coexistence feedback information is one type of the BA. The type (multi-STA or STA BA) is indicated in the BA control field 1302. The BA control field 1302 indicates the BA type at subfield 1310. The BA information field 1304 includes one or more AID-TID information subfields.

The M-BA frame 1300 indicates the unavailability target start time and unavailability duration fields. The M-BA frame 1300 may also indicate the future unavailability applicable link bitmap to indicate the specific communication links to which the unavailability applies. In some implementations, for the M-BA frame 1300, a special per AID TID information field 1306 is provided for feedback. In an example, the unavailability target start time and unavailability duration fields are 9 bits. In another example, the unavailability target start time and unavailability duration fields are 10 bits. In another example, the unavailability target start time field is set to the upper 10 bits of the 64-bit TSF (TSF [15:6]) and is larger than the TSF value at the end of the PPDU that carries the feedback

The M-BA frame 1300 may support several signaling options. The feedback type (e.g., coexistence) may be either determined by the BA control field 1302 or the BA information fields 1304. The feedback information (e.g., coexistence information) may be indicated in the BA information field 1304. Different signaling options are subsequently described but are not limited to the examples given below.

In a first signaling example, the per-AID TID information fields 1304 include the feedback type and content. An AID information field 1306 (e.g., a AID11 subfield) indicates that the feedback is provided whose type is indicated later in the acknowledgement (ACK) type and TID subfields or in the starting sequence number. In some implementations, the AID11 field indicates a specific type of feedback (e.g., the coexistence feedback). The AID11 subfield 1306 has 11 bits, so the values are limited for DL. When using the AID11 value, a value "0" in the acknowledgement type subfield may be used for acknowledgement type. For example, the reserved TIDs 8-15 may be used for the acknowledgement content. A fragment number provides a length of the feedback (e.g., a length of the BA bitmap subfield). If the AID information field 1306 does not indicate the exact type of the feedback, the starting sequence number subfield may be used. In some implementations, the starting sequence number may indicate one feedback type or compressed feedback types. In an example, a value of 2008 in the AID11 subfield identifies a per AID TID information subfield that carries feedback. If the AID11 subfield of the AID TID information subfield is not set to 2045, and if the Ack Type subfield and TID subfield are not equal to 0 and 13 respectively, then the per AID TID information subfield has a format in which the AID TID information field is 2 octets, the block ack starting sequency control field is 0 or 2 octets, and the block ack bitmap field is 0, 4, 8, 16, 32, 64, or 128 octets. If the AID11 subfield of the AID TID information subfield is not set to 2045, and if the Ack Type subfield and TID subfield are equal to 0 and 13 respectively, then the per AID TID information subfield has a format in which the AID TID information field is 2 octets, the block ack starting sequency control field is 0 or 2 octets, and feedback field is 0, 4, 8, 16, 32, 64, or 128 octets.

In a second signaling example, a subfield in the BA control field 1302 indicates that the M-BA includes the feedback using a *TID_INFO* subfield, a BA type subfield, or reserved bits. The BA starting sequence control may have an updated design for the per AID TID information subfield compared to legacy design to accommodate the feedback. The indication in the BA control field 1302 applies to the BA information field 1304 with one or more per AID TID information subfield used to indicate again the content type in the per AID TID information subfield.

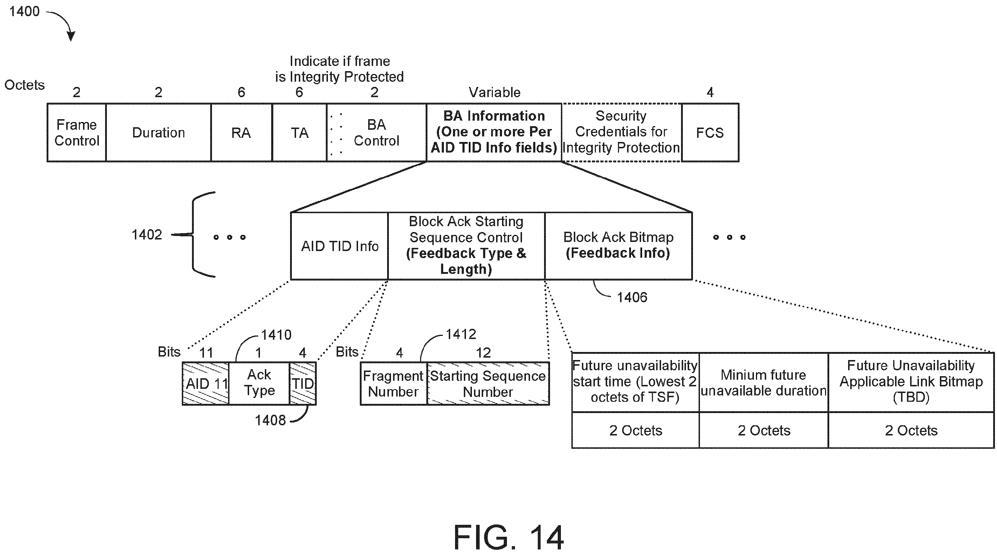

FIG. 14 illustrates an example of a special AID11 value in the per AID TID information field 1400 for coexistence feedback. A special AID11 value may be used for this feedback field 1400. The AID11 value is reserved value. For the multi-STA BA, the AID11 includes eleven bits. A special AID11 is defined as a feedback field. The type of the feedback may come in one or more subsequent fields 1402 which are part of the spare AID TID. The multiple field 1402 instances may include the feedback information. The field 1402 repurposes the block bit map that is used to provide feedback for the downlink transmission. The bitmap 1406 indicates that the client received a first medium access control PDU (MPDU). A sequence number is also included. The bitmap field 1406 is repurposed to carry the coexistence feedback information. In an example, there may be a future unavailability start time, a minimum future unavailability duration, a future unavailability applicable link bitmap, etc. in feedback information. The starting sequence number may be used to indicate that this is a coexistence feedback information type. Table 3 illustrates a copy of Table 3-39 below in which examples of per AID TID information for the special AID11 value.

**Table 3: Representing Table 9-39 indicating Context of the Per AID TID Information subfield and presence of optional subfields if the AID11 subfield is not 2045.**

| **Ack Type subfield values** | **TID subfield values** | **Presence of Block Ack Starting Sequence Control subfield and either BlockAck Bitmap or Feedback subfields** | **Context of a Per AID TID Information subfield in a Multi-STA BlockAck fame** |
|---|---|---|---|
| 0 | 0-7 | Present | Block Acknowledgement context: sent as an acknowledgment to QoS Data frames that solicit a BlockAck frame response or to a BlockAckReq frame |
| 1 | 0-7 | Not Present | Acknowledgment context: Sent as an acknowledgment to a QoS Data or QoS Null frame that solicits an ACK frame response. |
| 0 | 8-12 | Present | Reserved |
| 1 | 8-12 | Not Present | Reserved |
| 0 | 13 | Present | Feedback Context: Sent as feedback (e.g., of unavailability information, see 37.17.2 (Dynamic Unavailability Operation (DUO) mode)) |
| 1 | 13 | Not Present | ICR context |
| 0 | 14 | Present | Reserved |
| 1 | 14 | Not Present | All ack context: Sent as an acknowledgment to an A-MPDU that contains an MPDU that solicits an immediate response an all MPDUs contained in the A-MPDU are received successfully. |
| 0 | 15 | Present | Reserved |
| 1 | 15 | Not Present | Management/PS-Poll Frame acknowledgment context: Sent as an acknowledgment to a Management or PS-Poll frame. |
| NOTE 1 - Additional rules for acknowledgment, block acknowledgement, and all the ack context are defined in 26.4.2 (Acknowledgment context in a Multi-STA BlockAck frame) for a Multi-TID A-MPDU. | | | |
| NOTE 2 - As HE STAs do not use HCCA (see 10.23.1), TID values from 8 to 15 are not used in QoS Data frames. | | | |

In some implementations, the TID subfield 1408 may be used instead because the TID is reserved. The acknowledgement type field 1410 may be used to indicate a broadcast or unicast feedback type, indicating feedback for all stations and/or feedback for a particular station. The fragment number field 1412 is used to indicate a length of the feedback. Table 9-40 indicates the fragment number subfield encoding the multi-STA BA variant. In some implementations, other structures may be used for the fragment number field. A copy of Table 9-40 is illustrated below.

**Table 4: Representing Table 9-40 indicating Fragment Number Subfield Encoding.**

| Fragment Number Subfield | | | Fragmentatio n Level 3 (ON/OFF) | Block-Ack Bitmap or Feedback Subfield length (octets) | Maximum Number of MSDUs/A-MSDUs that can be Acknowledged |
|---|---|---|---|---|---|
| B3 | B2-B1 | B0 | | | |
| 0 | 0 | 0 | OFF | 8 | 64 |
| 0 | 1 | 0 | | 16 | 128 |
| 0 | 2 | 0 | | 32 | 256 |
| 0 | 3 | 0 | | 4 | 32 |
| 0 | 0 | 1 | ON | 8 | 16 |
| 0 | 1 | 1 | | 16 | 32 |
| 0 | 2 | 1 | | 32 | 64 |
| 0 | 3 | 1 | | 4 | 8 |
| 1 | 0 | 0 | OFF | 64 | 512 |
| 1 | 1 | 0 | | 128 | 1024 |
| 1 | 2 and 3 | 0 | | Reserved | Reserved |
| 1 | Any | 1 | | Reserved | Reserved |
| NOTE 1- A Multi-STA BlockAck frame with B0 of the Fragment Number subfield set to 1 cannot be sent to an HE-STA, unless the HE capabilities element received from the HE STA has the dynamic fragmentation support subfield equal to 3 (See 26.3, Fragmentation and defragmentation). | | | | | |
| NOTE 2- The column "maximum number of MSDU's/A-MSDU's that can be acknowledged is applicable for the block-ack bitmap subfield, and this column is N/A for the feedback subfield. | | | | | |
| NOTE 3- For UHR, Feedback subfield. | | | | | |

The fragment numbers, depending on the encoding in the bits, correspond to a number of octets illustrated as the size of the BA bitmap. Rather than use the BA bitmap to provide the BA feedback, the fragment number field 1412 is used to provide coexistence feedback. In some implementations, the client may use a value that is equivalent to eight octets in which six octets are used and two octets are reserved. In some implementations, the client may use a special AID to directly indicate the coexistence feedback, as described previously, though there are a limited number of AID values.

**Table 4: Feedback Type Subfield Encoding .**

| Feedback Type | Feedback Subfield Type |
|---|---|
| 0 | Unavailability feedback |
| 1 | Low latency feedback |
| 2 | Reserved |
| 3 | Co-TDMA feedback |
| 4-15 | Reserved |

Table 4 illustrates feedback type subfield encoding values.

The fragment numbers, depending on the encoding in the bits, correspond to a number of octets illustrated as the size of the BA bitmap. Rather than use the BA bitmap to provide the BA feedback, the fragment number field 1412 is used to provide coexistence feedback. In some implementations, the client may use a value that is equivalent to eight octets in which six octets are used and two octets are reserved. In some implementations, the client may use a special AID to directly indicate the coexistence feedback, as described previously, though there are a limited number of AID values.

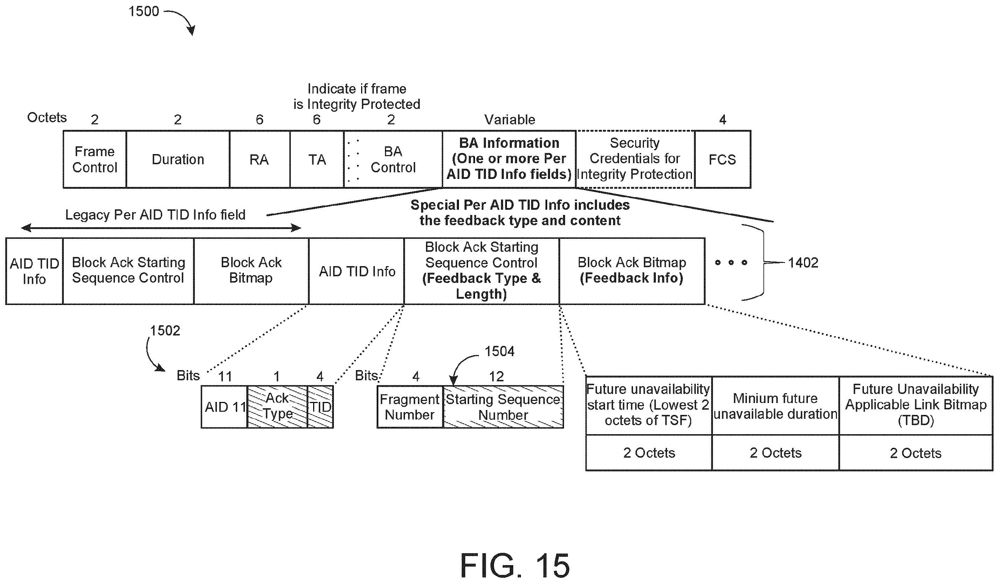

FIG. 15 illustrates an example of a proposed special per AID TID information field 1500 for coexistence feedback. In some implementations, rather than use a special AID value as described in relation to FIG. 14, a same AID (e.g., AID12) may be used, and the other fields of the AID TID information subfield 1502 are used to indicate that this is a feedback. The other fields indicate that the feedback is per AID TID and special per TID and the information for the feedback. For a feedback, a reserved value may be used. The starting sequence number subfield 1504 may indicate what the feedback type is, which is coexistence feedback in this example. The data may include other information such as power saving feedback or low latency feedback, BSR feedback, and so forth.

In some implementations, an ICF may use the UL length to indicate the length of the ICR that includes the coexistence feedback. In some implementations, the BSRP trigger frame may be used, but the ICF may use the UL length to indicate the length of the ICR in other trigger frame variants that use UL length. For example, for MU transmissions (either to initiate a DL transmission or to trigger the client in the UL), A-MPDU may be used, and the UL length may be met through end of frame (EOF) padding in the trigger based PPDU. In the SU case, an AP that transmits an ICF that uses the UL length (e.g., the BSRP trigger frame) may solicit an ICR in a non-HT PPDU format (instead of TB-PPDU), which is useful for TXOP protection against legacy devices. For example, in such a case, the EOF padding is not used to meet the UL length in 5 GHz because pre-EHT clients cannot decode A-MPDU.

There are two example, options on the UL length from a TXOP responder point of view in SU case. In a first option, TXOP responder does not consider the UL length when generating the response (e.g., UL length is reserved). In this option, a TXOP holder has to plan the TXOP based on additional feedback that may be included by a TXOP responder in the M-BA so that the TXOP holder meets the TXOP limit. For example, the BSRP frame is used, the BSRP trigger frame limits, in the single user case, client's response. A special pair AID TID information field is defined (similar to subfield 1502 in FIG. 15), but the field is not for feedback but used for padding. The padding is needed because the client may respond in this non HT-PPDU and cannot do other types of padding (e.g., for multi-STA BA). In some implementations, the TXOP holder is allowed to go beyond the TXOP limit.

In a second option, the TXOP responder (e.g., a non-AP STA in this case) is restricted by the response length and cannot exceed it. In such a case, if the UL length field is used, a Special per AID TID information field is used for padding in the M-BA. For example, the AP may request a client or responder to always use a maximum number of per AID TID information fields. The AP may always limit the client by the number of fields (e.g., 2). The TXOP holder is helped to meet the TXOP limit. For example, for the next 5 milliseconds, the TXOP holder has planned the transmissions for every frame for the next 5ms. The TXOP holder uses a maximum of two per AID TID information fields 1504 to limit the response length of the ICR for the multi-STA BA. Else, as described previously, there is no such limit imposed and the client basically always adds, in an unsolicited process, additional feedback.

In some implementations, there is a limitation to using the uplink length in the BSRP. In this case, if the response is using the BSRP UL length format, the TXOP holder cannot aggregate other frames to do the padding. Additionally, the TXOP holder cannot aggregate other frames to do other feedback, similar to (for example) multi-STA BA plus QoS null. The client may need to report additional feedback (e.g., legacy feedback) with the multi-STA BA. An extension for the per AID TID information field is included (e.g., a new type). The type may be indicated in the starting sequence number field 1504 of FIG. 15. The type, for example, may indicate that the feedback is BSR (or another feedback type). There are therefore multiple instances of the field 1402 near each other, each indicating a type. For example, if the type is BSR, the client may use that field to report the BSR. There are also additional legacy functionalities such as defined in the A-control field including OM control, uplink power, headroom, and so forth. These may be defined for including in the field 1402 instances as well.

In some implementations, the client sends a multi-STA BA as a response to the DL PPDU from the AP. If the client increases a size of the multi-STA BA, there may be an issue with the TXOP limit. A limit may be imposed for the size of the feedback to a maximum value that may be added by the station in an unsolicited fashion. This is because, in the downlink, there is not an uplink length but just a data transmission.

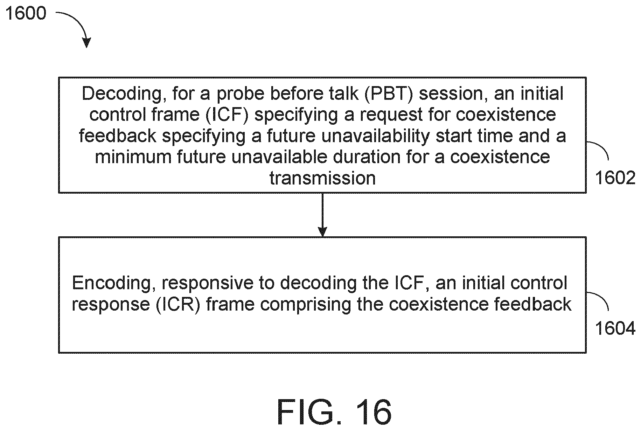

FIG. 16 illustrates a flowchart of an example method 1600, according to some implementations. For clarity of presentation, the description that follows generally describes method 1600 in the context of the other figures in this description. For example, method 1600 may be performed by non-AP MLD of FIG. 2. It will be understood that method 1600 may be performed, for example, by any suitable system, environment, software, hardware, or a combination of systems, environments, software, and hardware, as appropriate. In some implementations, various steps of method 1600 may be run in parallel, in combination, in loops, or in any order.

The example method 1600 illustrated in FIG. 16 may be modified or reconfigured to include additional, fewer, or different steps (not illustrated in FIG. 16), which may be performed in the order illustrated or in a different order.

The method 1600 includes decoding (1602), for a probe before talk (PBT) session, an initial control frame (ICF) indicating a request for coexistence feedback indicating a future unavailability start time and a minimum future unavailability duration for a coexistence transmission. The method includes encoding (1604), responsive to decoding the ICF, an initial control response (ICR) frame comprising the coexistence feedback.

FIG. 17 illustrates a block diagram of an electronic device 1700, according to some implementations. The electronic device 1700 may be a cellular telephone, a smartwatch, an access point, a wireless speaker, an Internet-of-Things (IoT) device, among other examples. The electronic device 1700 includes hardware resources 1702 that include one or more processors (or processor cores) 1710, one or more memory/storage devices 1720, and one or more communication resources 1730, each of which may be communicatively coupled via a bus 1740.

The one or more processors 1710 include one or more devices configured to perform computational operations. For example, the one or more processors 1710 may include one or more microprocessors, application-specific integrated circuits (ASICs), microcontrollers, graphics processing units (GPUs), programmable-logic devices, and/or one or more digital signal processors (DSPs). The processors 1710 may include, for example, a processor 1712 and a processor 1714. The processor(s) 1710 may be, for example, a central processing unit (CPU), a reduced instruction set computing (RISC) processor, a complex instruction set computing (CISC) processor, a graphics processing unit (GPU), a DSP such as a baseband processor, an ASIC, an FPGA, a radio-frequency integrated circuit (RFIC), another processor (including those discussed herein), or any suitable combination thereof.

The memory/storage devices 1720 may include main memory, disk storage, or any suitable combination thereof. The memory/storage devices 1720 may include, but are not limited to, any type of volatile or nonvolatile memory such as dynamic random-access memory (DRAM), static random-access memory (SRAM), erasable programmable read-only memory (EPROM), electrically erasable programmable read-only memory (EEPROM), flash memory, solid-state storage, etc. In some implementations, the memory/storage devices 1720 are coupled to one or more high-capacity mass-storage devices (not illustrated). In some examples, memory/storage devices 1720 may be coupled to a magnetic or optical drive, a solid-state drive, or another type of mass-storage device. In these examples, the memory/storage devices 1720 may be used by electronic device 1700 as fast-access storage for often-used data, while the mass-storage device is used to store less frequently used data.

The communication resources 1730 may include interconnection or network interface components or other suitable devices to communicate with one or more peripheral devices 1704 or one or more databases 1706 via a network 1708. For example, the communication resources 1730 may include wired communication components (e.g., for coupling via USB), cellular communication components, NFC components, Bluetooth^{®} (or Bluetooth^{®} Low Energy) components, Wi-Fi^{®} components, and other communication components.

The communication resources 1730 include one or more devices configured to couple to and communicate on a wired and/or wireless network (e.g., to perform network operations), such as: control logic, one or more interface circuits and a set of antennas (or antenna elements) in an adaptive array that may be selectively turned on and/or off by control logic to create a variety of optional antenna patterns or "beam patterns." Alternatively, instead of the set of antennas, in some examples, electronic device 1700 includes one or more nodes, e.g., a pad or a connector, which may be coupled to the set of antennas. Thus, electronic device 1700 might or might not include the set of antennas. For example, communication resources 1730 may include a Bluetooth^{™} networking system, a cellular networking system (e.g., a 3G/4G/5G/6G network such as UMTS, LTE, etc.), a universal serial bus (USB) networking system, a networking system based on the standards described in IEEE 802.11 (e.g., a Wi-Fi^{®} networking system), an Ethernet networking system, and/or another networking system.

In some implementations, communication resources 1730 includes one or more radios, such as a wake-up radio that is used to receive wake-up frames and wake-up beacons, and a main radio that is used to transmit and/or receive frames or packets during a normal operation mode. The wake-up radio and the main radio may be implemented separately (such as using discrete components or separate integrated circuits) or in a common integrated circuit.

The communication resources 1730 include processors, controllers, radios/antennas, sockets/plugs, and/or other devices used for coupling to, communicating on, and handling data and events for each supported networking system. Note that mechanisms used for coupling to, communicating on, and handling data and events on the network for a network system are sometimes collectively referred to as a "network interface" for the network system.

Instructions 1750 may comprise software, a program, an application, an applet, an app, or other executable code for causing at least any of the processors 1710 to perform any one or more of the methodologies discussed herein. The instructions 1750 may reside, completely or partially, within at least one of the processors 1710 (e.g., within the processor's cache memory), the memory/storage devices 1720, or any suitable combination thereof. In some implementations, any portion of the instructions 1750 may be transferred to the hardware resources 1702 from any combination of the peripheral devices 1704 or the databases 1706. Accordingly, the memory of processors 1710, the memory/storage devices 1720, the peripheral devices 1704, and the databases 1706 are examples of computer-readable and machine-readable media.

While the preceding discussion used a Wi-Fi communication protocol as an illustrative example, in other implementations a wide variety of communication protocols and, more generally, wireless communication techniques may be used. Thus, the communication techniques may be used in a variety of network interfaces. Furthermore, while some of the operations in the preceding implementations were implemented in hardware or software, in general the operations in the preceding implementations may be implemented in a wide variety of configurations and architectures. Therefore, some or all of the operations in the preceding implementations may be performed in hardware, in software or a combination of both. For example, at least some of the operations in the communication techniques may be implemented using instructions 1750, operating system (such as a driver for an interface circuit in communication resources 1730) or in firmware in an interface circuit in communication resources 1730. Additionally, or alternatively, at least some of the operations in the communication techniques may be implemented in a physical layer, such as hardware in an interface circuit in communication resources 1730. In some implementations, the communication techniques are implemented, at least in part, in a MAC layer and/or in a physical layer in an interface circuit in communication resources 1730.

While the preceding implementations illustrated the use of wireless signals in one or more bands of frequencies, in some implementations, electromagnetic signals in one or more different frequency bands are used to determine the range. For example, these signals may be communicated in one or more bands of frequencies, including: a microwave frequency band, a radar frequency band, 900 MHz, 2.4 GHz, 5 GHz, 6 GHz, 60 GHz, and/or a band of frequencies used by a Citizens Broadband Radio Service, by LTE, 5G, or any other communication system.

Although specific components are used to describe electronic device 1700, in some implementations, different components and/or subsystems may be present in electronic device 1700. For example, electronic device 1700 may include one or more additional processing subsystems, memory subsystems, networking subsystems, and/or display subsystems. Additionally, one or more of the subsystems might not be present in electronic device 1700. In some implementations, electronic device 1700 may include one or more additional subsystems that are not illustrated in FIG. 17. In some implementations, electronic device may include an analysis subsystem that performs at least some of the operations in the communication techniques. Although separate subsystems are illustrated in FIG. 17, in some implementations some or all of a given subsystem or component may be integrated into one or more of the other subsystems or component(s) in electronic device 1700.

For one or more embodiments, at least one of the components set forth in one or more of the preceding figures may be configured to perform one or more operations, techniques, processes, or methods as set forth in the example section below. For example, the baseband circuitry as described above in connection with one or more of the preceding figures may be configured to operate in accordance with one or more of the examples set forth below. For another example, circuitry associated with a UE, base station, network element, etc. as described above in connection with one or more of the preceding figures may be configured to operate in accordance with one or more of the examples set forth below in the example section.

### Examples

In the following sections, further exemplary embodiments are provided.

Example 1 includes a method for wireless communication, by a client device, with an access point. The method comprises decoding, for a probe before talk (PBT) session, an initial control frame (ICF) indicating a request for coexistence feedback indicating a future unavailability start time and a minimum future unavailability duration for a coexistence transmission. The method comprises encoding, responsive to decoding the ICF, an initial control response (ICR) frame comprising the coexistence feedback.

Example 2 includes the method of example 1, wherein the ICF further indicates a second feedback type in addition to the coexistence feedback, and wherein the ICR includes the second feedback type in addition to the coexistence feedback.

Example 3 includes the method of any of examples 1 to 2, wherein the second feedback type is requested as a common feedback.

Example 4 includes the method of any of examples 1 to 3, wherein the common feedback uses a reserved bit in an extremely high throughput (EHT) common information field.

Example 5 includes the method of any of examples 1 to 4, wherein the common feedback uses a reserved bit in a special user information field.

Example 6 includes the method of any of examples 1 to 5, wherein the second feedback type is requested as a per-user feedback.

Example 7 includes the method of any of examples 1 to 6, wherein the second feedback type includes one of a buffer status report (BSR), power saving information, or low latency feedback.

Example 8 includes the method of any of examples 1 to 7, wherein the ICR frame includes a multi-station block acknowledgement (M-BA) frame that is sent as a response to the ICF from the access point.

Example 9 includes the method of any of examples 1 to 8, wherein the M-BA frame indicates at least one or more of an unavailability start time or an unavailability duration of the coexistence feedback.

Example 10 includes the method of any of examples 1 to 9, wherein the M-BA comprises a BA information field comprising one or more per-association identifier (per-AID) traffic identifier (TID) information fields indicating the coexistence feedback in a BA bitmap subfield.

Example 11 includes the method of any of examples 1 to 10, wherein the one or more per-AID TID information fields each comprises an acknowledgement type field or a TID field that indicates a special per-AID TID information field for including the coexistence feedback.

Example 12 includes the method of any of examples 1 to 11, wherein the one or more per-AID TID information fields each comprises a fragment number field indicating a length of the coexistence feedback included in the BA bitmap subfield.

Example 13 includes the method of any of examples 1 to 12, wherein the one or more per-AID TID information fields each comprises a starting sequence number subfield indicating that a type of feedback is the coexistence feedback.

Example 14 includes the method of any of examples 1 to 13, wherein the BA bitmap subfield indicates the future unavailability start time, the minimum future unavailability duration, and a future unavailability applicable link bitmap.

Example 15 includes the method of any of examples 1 to 14, wherein the one or more per-AID TID information fields have an AID value of AID11, wherein the value of AID11 indicates that a general feedback is provided in the one or more per-AID TID information fields.

Example 16 includes the method of any of examples 1 to 15, wherein the one or more per-AID TID information fields have an AID value of AID11, wherein the value of AID11 indicates that the coexistence feedback is provided in the one or more per-AID TID information fields.

Example 17 includes the method of any of examples 1 to 16, wherein the ICF comprises a buffer status report poll (BSRP) trigger frame configured to solicit a multi-station block acknowledgment (M-BA) in a non-high throughput (non-HT) physical layer protocol data unit (PPDU) format, the M-BA including the coexistence feedback.

Example 18 includes the method of any of examples 1 to 17, wherein the BSRP ICF is addressed to a single station, and wherein a receiver address field indicates a recipient station medium access control (MAC) address.

Example 19 includes the method of any of examples 1 to 18, wherein the BSRP ICF is addressed to a single station, and wherein a transmitter address field indicates a transmitting station medium access control (MAC) address.

Example 20 includes the method of any of examples 1 to 19, wherein the BSRP ICF is addressed to a multiple stations, and wherein a receiver address field indicates a broadcast address.

Example 21 includes the method of any of examples 1 to 20, wherein the BSRP ICF is addressed to multiple stations, and wherein a transmitter address field indicates a transmitting station medium access control (MAC) address.

Example 22 includes the method of any of examples 1 to 21, wherein the BSRP ICF includes a BSRP response PPDU field in a reserved bit, the BSRP response PPDU field indicating a type of the BSRP trigger response.

Example 23 includes the method of any of examples 1 to 22, wherein the BSRP ICF includes a BSRP response PPDU field in a special user information field indicating a PPDU type of the BSRP trigger response.

Example 24 includes the method of any of examples 1 to 23, wherein the BSRP ICF includes a CS Required field that is always set to a value to prevent subsequent transmissions from interference at a receiver regardless of an uplink length value set in the BSRP.

Example 25 includes the method of any of examples 1 to 24, wherein the BSRP ICF includes an uplink length field that indicates a feedback type indicated by a transmission operations (TXOP) holder.

Example 26 includes the method of any of examples 1 to 25, wherein the M-BA includes additional feedback that is unsolicited in the ICF.

Example 27 includes the method of any of examples 1 to 26, wherein the BSRP ICF includes an uplink length field that indicates a preferred feedback bitmap.

Example 28 includes the method of any of examples 1 to 27, wherein the BSRP ICF includes an uplink length field that indicates a length of the M-BA including a value of a L-SIG length field of a solicited trigger based PPDU or a non-HT PPDU.

Example 29 includes the method of any of examples 1 to 28, wherein a response PPDU rate/MCS field of the BSRP response PPDU indicates a data rate of the BSRP response PPDU.

Example 30 includes the method of any of examples 1 to 29, wherein the ICF comprises a buffer status report poll (BSRP) trigger frame configured to solicit the coexistence feedback and additional preferred feedback from transmitter operations (TXOP) holder.

Example 31 includes the method of any of examples 1 to 30, wherein the additional preferred feedback includes one of a buffer status report (BSR), power saving information, and low latency feedback.

Example 32 includes the method of any of examples 1 to 31, wherein the BSRP trigger frame indicates a special AID value to indicate one or more special user information fields that carry common feedback including the coexistence feedback.

Example 33 includes the method of any of examples 1 to 32, wherein the one or more special user information fields that carry common feedback are grouped after a user information field indicating the special AID value.

Example 34 includes the method of any of examples 1 to 33, wherein the BSRP trigger frame includes a resource unit allocation field that indicates a maximum bandwidth of the non-HT PPDU carrying the BSRP response.

Example 35 includes the method of any of examples 1 to 34, wherein the BSRP trigger frame includes a static/dynamic field that indicates that a transmission operations (TXOP) responder sends a BSRP response PPDU only when all subchannels indicated by the resource unit allocation field are idle.

Example 36 includes the method of any of examples 1 to 35, wherein the BSRP trigger frame includes a static/dynamic field that indicates that a transmission operations (TXOP) responder sends a BSRP response PPDU only when at least one subchannel indicated by the resource unit allocation field is idle.

Example 37 may include one or more non-transitory computer-readable media including instructions to cause an electronic device, upon execution of the instructions by one or more processors of the electronic device, to perform one or more elements of a method described in or related to any of examples 1-36, or any other method or process described herein.

Example 38 may include an apparatus including logic, modules, or circuitry to perform one or more elements of a method described in or related to any of examples 1-36, or any other method or process described herein.

Example 39 may include a method, technique, or process as described in or related to any of examples 1-36, or portions or parts thereof.

Example 40 may include an apparatus including: one or more processors and one or more computer-readable media including instructions that, when executed by the one or more processors, cause the one or more processors to perform the method, techniques, or process as described in or related to any of examples 1-36, or portions thereof.

Example 41 may include a signal as described in or related to any of examples 1-36, or portions or parts thereof.

Example 42 may include a datagram, information element, packet, frame, segment, PDU, or message as described in or related to any of examples 1-36, or portions or parts thereof, or otherwise described in the present disclosure.

Example 43 may include a signal encoded with data as described in or related to any of examples 1-36, or portions or parts thereof, or otherwise described in the present disclosure.

Example 44 may include a signal encoded with a datagram, IE, packet, frame, segment, PDU, or message as described in or related to any of examples 1-36, or portions or parts thereof, or otherwise described in the present disclosure.

Example 45 may include an electromagnetic signal carrying computer-readable instructions, wherein execution of the computer-readable instructions by one or more processors is to cause the one or more processors to perform the method, techniques, or process as described in or related to any of examples 1-36, or portions thereof.

Example 46 may include a computer program including instructions, wherein execution of the program by a processing element is to cause the processing element to carry out the method, techniques, or process as described in or related to any of examples 1-36, or portions thereof. The operations or actions performed by the instructions executed by the processing element may include the methods of any one of examples 1-36.

Example 47 may include a signal in a wireless network as described herein.

Example 48 may include a method of communicating in a wireless network as described herein.

Example 49 may include a system for providing wireless communication as described herein. The operations or actions performed by the system may include the methods of any one of examples 1-36.

Example 50 may include a device for providing wireless communication as shown and described herein. The operations or actions performed by the device may include the methods of any one of examples 1-36.

The previously described examples 1-60 are implementable using a computer-implemented method; a non-transitory, computer-readable medium storing computer-readable instructions to perform the computer-implemented method; and a computer system including a computer memory interoperably coupled with a hardware processor configured to perform the computer-implemented method or the instructions stored on the non-transitory, computer-readable medium.

A system may be configured to perform particular operations or actions by virtue of having software, firmware, hardware, or a combination of them installed on the system that in operation causes or cause the system to perform the actions. One or more computer programs may be configured to perform particular operations or actions by virtue of including instructions that, when executed by data processing apparatus, cause the apparatus to perform the actions. The operations or actions performed either by the system or by the instructions executed by data processing apparatus may include the methods of any one of examples 1-36.

Any of the above-described examples may be combined with any other example (or combination of examples), unless explicitly stated otherwise. The foregoing description of one or more implementations provides illustration and description but is not intended to be exhaustive or to limit the scope of embodiments to the precise form disclosed. Modifications and variations are possible in light of the above teachings or may be acquired from practice of various embodiments.

Although the embodiments above have been described in considerable detail, numerous variations and modifications will become apparent to those skilled in the art once the above disclosure is fully appreciated. It is intended that the following claims be interpreted to embrace all such variations and modifications.

It is well understood that the use of personally identifiable information should follow privacy policies and practices that are generally recognized as meeting or exceeding industry or governmental requirements for maintaining the privacy of users. In particular, personally identifiable information data should be managed and handled so as to minimize risks of unintentional or unauthorized access or use, and the nature of authorized use should be clearly indicated to users.

### Clauses

1. A method for wireless communication, by a client device, with an access point, the method comprising:
   decoding, for a probe before talk (PBT) session, an initial control frame (ICF) indicating a request for coexistence feedback indicating a future unavailability start time and a future unavailability duration for a coexistence transmission; and
   encoding, responsive to decoding the ICF, an initial control response (ICR) frame comprising the coexistence feedback.
2. The method of clause 1, wherein the ICF further indicates a second feedback type in addition to the coexistence feedback, and wherein the ICR includes the second feedback type in addition to the coexistence feedback.
3. The method of clause 2, wherein the second feedback type is requested as a common feedback,
   wherein the common feedback uses a reserved bit in an extremely high throughput (EHT) common information field, or
   wherein the common feedback uses a reserved bit in a special user information field.
4. The method of clause 1, wherein the ICR frame includes a multi-station block acknowledgement (M-BA) frame that is sent as a response to the ICF from the access point.
5. The method of clause 4, wherein the M-BA frame indicates at least one or more of an unavailability start time or an unavailability duration of the coexistence feedback.
6. The method of clause 4, wherein the M-BA frame comprises a BA information field comprising one or more per-association identifier (per-AID) traffic identifier (TID) information fields indicating the coexistence feedback in a BA bitmap subfield.
7. The method of clause 6, wherein the one or more per-AID TID information fields each comprises one or more of:
   an acknowledgement type field or a TID field that indicates a special per-AID TID information field for including the coexistence feedback;
   a fragment number field indicating a length of the coexistence feedback included in the BA bitmap subfield; or
   a starting sequence number subfield indicating that a type of feedback is the coexistence feedback.
8. The method of clause 6, wherein the BA bitmap subfield indicates the future unavailability start time, the future unavailability duration, and a future unavailability applicable link bitmap.
9. The method of clause 6, wherein the one or more per-AID TID information fields have an AID value of AID11, wherein the AID value of AID11 indicates that a general feedback is provided in the one or more per-AID TID information fields.
10. The method of clause 6, wherein the one or more per-AID TID information fields have an AID value of AID11, wherein the AID value of AID11 indicates that the coexistence feedback is provided in the one or more per-AID TID information fields.
11. The method of clause 1, wherein the ICF comprises a buffer status report poll (BSRP) trigger frame configured to solicit a multi-station block acknowledgment (M-BA) frame in a non-high throughput (non-HT) physical layer protocol data unit (PPDU) format, the M-BA frame including the coexistence feedback.
12. The method of clause 11, wherein the BSRP trigger frame is addressed to a single station, and wherein a receiver address field indicates a recipient station medium access control (MAC) address, and wherein a transmitter address field indicates a transmitting station medium access control (MAC) address.
13. The method of clause 11, wherein the BSRP trigger frame is addressed to a multiple stations, and wherein a receiver address field indicates a broadcast address, and wherein the BSRP trigger frame is addressed to multiple stations, and wherein a transmitter address field indicates a transmitting station medium access control (MAC) address.
14. The method of clause 11, wherein the BSRP trigger frame includes a CS Required field that is always set to a value to prevent subsequent transmissions from interference at a receiver regardless of an uplink length value set in the BSRP.
15. The method of clause 11, wherein the BSRP trigger frame includes an uplink length field that indicates a feedback type indicated by a transmission operations (TXOP) holder.
16. The method of clause 11, wherein the BSRP trigger frame includes an uplink length field that indicates a length of the M-BA frame including a value of a L-SIG length field of a solicited trigger based PPDU or a non-HT PPDU, and wherein a response PPDU rate/MCS field of a BSRP response PPDU indicates a data rate of the BSRP response PPDU.
17. The method of clause 1, wherein the ICF comprises a buffer status report poll (BSRP) trigger frame configured to solicit the coexistence feedback and additional preferred feedback from transmitter operations (TXOP) holder, wherein the additional preferred feedback includes one of a buffer status report (BSR), power saving information, and low latency feedback.
18. The method of clause 17, wherein the BSRP trigger frame indicates a special AID value to indicate one or more special user information fields that carry common feedback including the coexistence feedback.
19. One or more processors configured for wireless communication, the one or more processors configured to perform operations comprising:
   decoding, for a probe before talk (PBT) session, an initial control frame (ICF) indicating a request for coexistence feedback indicating a future unavailability start time and a future unavailability duration for a coexistence transmission; and
   encoding, responsive to decoding the ICF, an initial control response (ICR) frame comprising the coexistence feedback.
20. An apparatus configured for wireless communication, the apparatus comprising one or more processors configured to perform operations comprising:
   decoding, for a probe before talk (PBT) session, an initial control frame (ICF) indicating a request for coexistence feedback indicating a future unavailability start time and a future unavailability duration for a coexistence transmission; and
   encoding, responsive to decoding the ICF, an initial control response (ICR) frame comprising the coexistence feedback.

## Claims

1. A method for wireless communication, by a client device, with an access point, the method comprising:
decoding, for a probe before talk, PBT, session, an initial control frame, ICF, indicating a request for coexistence feedback indicating a future unavailability start time and a future unavailability duration for a coexistence transmission; and
encoding, responsive to decoding the ICF, an initial control response, ICR, frame comprising the coexistence feedback.

2. The method of claim 1, wherein the ICF further indicates a second feedback type in addition to the coexistence feedback, and wherein the ICR includes the second feedback type in addition to the coexistence feedback.

3. The method of claim 2, wherein the second feedback type is requested as a common feedback,
wherein the common feedback uses a reserved bit in an extremely high throughput, EHT, common information field, or
wherein the common feedback uses a reserved bit in a special user information field.

4. The method of claim 1, wherein the ICR frame includes a multi-station block acknowledgement, M-BA, frame that is sent as a response to the ICF from an access point.

5. The method of claim 4, wherein the M-BA frame indicates at least one or more of an unavailability start time or an unavailability duration of the coexistence feedback.

6. The method of claim 4, wherein the M-BA frame comprises a BA information field comprising one or more per-association identifier, per-AID, traffic identifier, TID, information fields indicating the coexistence feedback in a BA bitmap subfield.

7. The method of claim 6, wherein the one or more per-AID TID information fields each comprises one or more of:
an acknowledgement type field or a TID field that indicates a special per-AID TID information field for including the coexistence feedback;
a fragment number field indicating a length of the coexistence feedback included in the BA bitmap subfield; or
a starting sequence number subfield indicating that a type of feedback is the coexistence feedback.

8. The method of claim 6, wherein the BA bitmap subfield indicates the future unavailability start time, the future unavailability duration, and a future unavailability applicable link bitmap.

9. The method of claim 6, wherein the one or more per-AID TID information fields have an AID value of AID11, wherein the AID value of AID11 indicates that a general feedback is provided in the one or more per-AID TID information fields.

10. The method of claim 6, wherein the one or more per-AID TID information fields have an AID value of AID11, wherein the AID value of AID11 indicates that the coexistence feedback is provided in the one or more per-AID TID information fields.

11. The method of claim 1, wherein the ICF comprises a buffer status report poll, BSRP, trigger frame configured to solicit a multi-station block acknowledgment, M-BA, frame in a non-high throughput, non-HT, physical layer protocol data unit, PPDU, format, the M-BA frame including the coexistence feedback.
wherein the BSRP trigger frame is addressed to a single station, and wherein a receiver address field indicates a recipient station medium access control, MAC, address, and wherein a transmitter address field indicates a transmitting station medium access control, MAC, address;

12. The method of claim 11, wherein the BSRP trigger frame is addressed to a multiple stations, and wherein a receiver address field indicates a broadcast address, and wherein the BSRP trigger frame is addressed to multiple stations, and wherein a transmitter address field indicates a transmitting station medium access control, MAC, address.

13. The method of claim 11, wherein the BSRP trigger frame includes a CS Required field that is always set to a value to prevent subsequent transmissions from interference at a receiver regardless of an uplink length value set in the BSRP.

14. The method of claim 11, wherein the BSRP trigger frame includes an uplink length field that indicates a feedback type indicated by a transmission operations, TXOP, holder
wherein the BSRP trigger frame includes an uplink length field that indicates a length of the M-BA frame including a value of a L-SIG length field of a solicited trigger based PPDU or a non-HT PPDU, and wherein a response PPDU rate/MCS field of a BSRP response PPDU indicates a data rate of the BSRP response PPDU; or
wherein the ICF comprises a buffer status report poll, BSRP, trigger frame configured to solicit the coexistence feedback and additional preferred feedback from transmitter operations, TXOP, holder, wherein the additional preferred feedback includes one of a buffer status report, BSR, power saving information, and low latency feedback, and wherein the BSRP trigger frame indicates a special AID value to indicate one or more special user information fields that carry common feedback including the coexistence feedback.

15. One or more processors configured for wireless communication, the one or more processors configured to perform operations comprising the method of any of claims 1-14.
